# EUROPEAN PATENT SPECIFICATION

(11) **EP 4 387 907 B1**
(45) Date of publication and mention of the grant of the patent: **18.11.2026**
(21) Application number: 22773021.5
(22) Date of filing: 19.08.2022
(51) Int. Cl.: B65G 1/04, B65G 1/06

(54) **DETERMINING A KINEMATIC STATE OF A LOAD HANDLING DEVICE IN A STORAGE SYSTEM**
BESTIMMUNG EINES KINEMATISCHEN ZUSTANDS EINER LASTHANDHABUNGSVORRICHTUNG IN EINEM SPEICHERSYSTEM
DÉTERMINATION D'UN ÉTAT CINÉMATIQUE D'UN DISPOSITIF DE MANIPULATION DE CHARGE DANS UN SYSTÈME DE STOCKAGE

(30) Priority: 20.08.2021 GB 202112007; 27.01.2022 GB 202201029
(43) Date of publication of application: 26.06.2024
(60) Divisional application: 26211705.4
(73) Proprietor: Ocado Innovation Limited, Hatfield, Hertfordshire AL10 9UL (GB)
(72) Inventor: TRIPODI, Ernesto, Hatfield, Hertfordshire AL10 9UL (GB); RAIMONDI COMINESI, Stefano, Hatfield, Hertfordshire AL10 9UL (GB); BRUEN, Thomas, Hatfield, Hertfordshire AL10 9UL (GB); DIMITROPOULOS, Chrysanthos, Hatfield, Hertfordshire AL10 9UL (GB)
(74) Representative: Ocado Group IP Department
(86) International application number: PCT/GR2022/000043
(87) International publication number: WO 2023/021307

(56) References cited:
- EP-A1- 3 115 320
- WO-A1-2019/229181
- WO-A1-2020/221767
- US-B2- 10 899 015

## Description

### Technical Field

The present invention generally relates to the field of a storage or fulfilment system in which stacks of bins or containers are arranged within a grid framework structure, and more specifically, to determine a kinematic state of a load handling device in the storage system.

### Background

Online retail businesses selling multiple product lines, such as online grocers and supermarkets, require systems that can store tens or hundreds of thousands of different product lines. The use of single-product stacks in such cases can be impractical since a vast floor area would be required to accommodate all of the stacks required. Furthermore, it can be desirable to store small quantities of some items, such as perishables or infrequently ordered goods, making single-product stacks an inefficient solution.

International patent application WO 98/049075A (Autostore) describes a system in which multi-product stacks of containers are arranged within a frame structure.

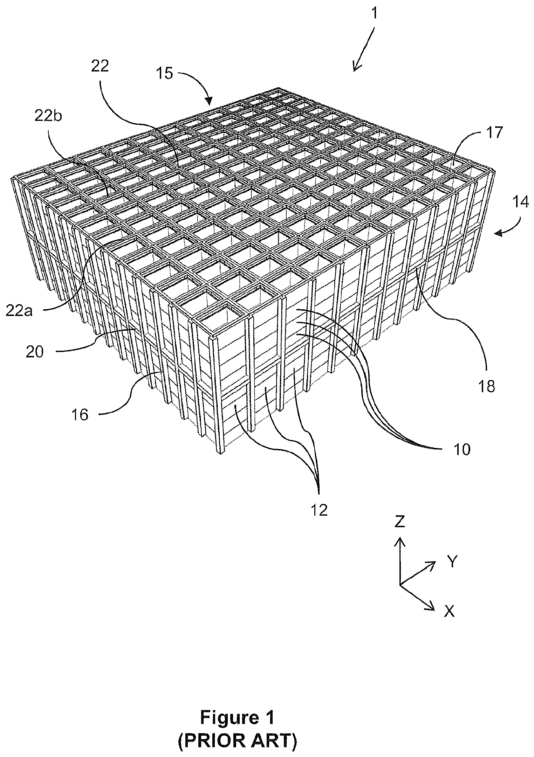

PCT Publication No. WO2015/185628A (Ocado) describes a further known storage and fulfilment system in which stacks of containers are arranged within a grid framework structure. The containers are accessed by one or more load handling devices, otherwise known as "bots", operative on tracks located on the top of the grid framework structure. A system of this type is illustrated schematically in Figures 1 to 3 of the accompanying drawings.

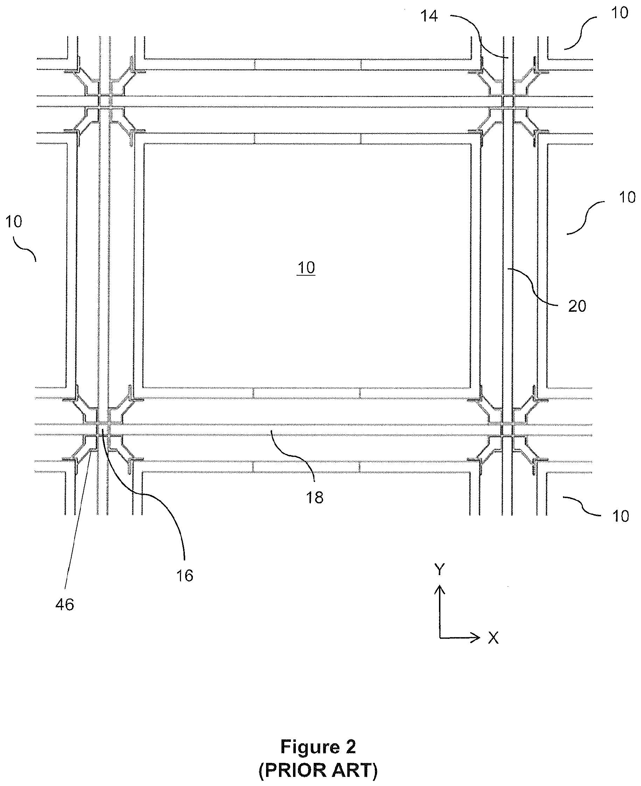

As shown in Figures 1 and 2, stackable containers 10, also known as "bins" or "totes", are stacked on top of one another to form stacks 12. The stacks 12 are arranged in a grid framework structure 14, e.g. in a warehousing or manufacturing environment. The grid framework structure 14 is made up of a plurality of storage columns or grid columns. Each grid in the grid framework structure has at least one grid column to store a stack of containers. Figure 1 is a schematic perspective view of the grid framework structure 14, and Figure 2 is a schematic top-down view showing a stack 12 of bins 10 arranged within the framework structure 14. Each bin 10 typically holds a plurality of product items (not shown). The product items within a bin 10 may be identical or different product types depending on the application.

The grid framework structure 14 comprises a plurality of upright members 16 that support horizontal members 18, 20. A first set of parallel horizontal grid members 18 is arranged perpendicularly to a second set of parallel horizontal members 20 in a grid pattern to form a horizontal grid structure 15 supported by the upright members 16, The members 16, 18, 20 are typically manufactured from metal. The bins 10 are stacked between the members 16, 18, 20 of the grid framework structure 14, so that the grid framework structure 14 guards against horizontal movement of the stacks 12 of bins 10 and guides the vertical movement of the bins 10.

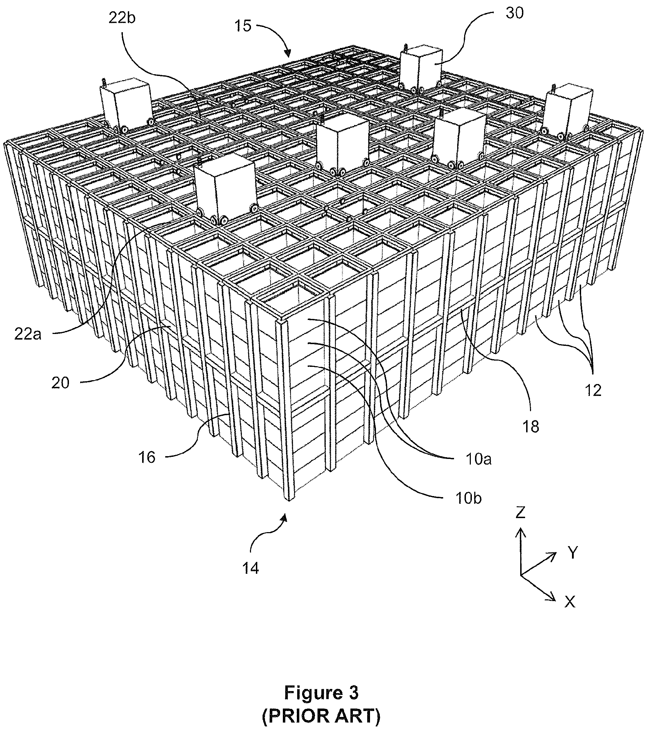

The top level of the grid framework structure 14 comprises a grid or grid structure 15, including rails 22 arranged in a grid pattern across the top of the stacks 12. Referring to Figure 3, the rails or tracks 22 guide a plurality of load handling devices 30. A first set 22a of parallel rails 22 guide movement of the robotic load handling devices 30 in a first direction (e.g. an X-direction) across the top of the grid framework structure 14. A second set 22b of parallel rails 22, arranged perpendicular to the first set 22a, guide movement of the load handling devices 30 in a second direction (e.g. a Y-direction), perpendicular to the first direction. In this way, the rails 22 allow the robotic load handling devices 30 to move laterally in two dimensions in the horizontal X-Y plane. A load handling device 30 can be moved into position above any of the stacks 12.

A known form of load handling device 30 - shown in Figures 4, 5A and 5B - is described in PCT Patent Publication No. WO2015/019055 (Ocado) where each load handling device 30 covers a single grid space 17 of the grid framework structure 14. This arrangement allows a higher density of load handlers and thus a higher throughput for a given sized system.

The load handling device 30 comprises a vehicle 32, which is arranged to travel on the rails 22 of the frame structure 14. A first set of wheels 34, consisting of a pair of wheels 34 on the front of the vehicle 32 and a pair of wheels 34 on the back of the vehicle 32, is arranged to engage with two adjacent rails of the first set 22a of rails 22. Similarly, a second set of wheels 36, consisting of a pair of wheels 36 on each side of the vehicle 32, is arranged to engage with two adjacent rails of the second set 22b of rails 22. Each set of wheels 34, 36 can be lifted and lowered so that either the first set of wheels 34 or the second set of wheels 36 is engaged with the respective set of rails 22a, 22b at any one time. For example, when the first set of wheels 34 is engaged with the first set of rails 22a and the second set of wheels 36 is lifted clear from the rails 22, the first set of wheels 34 can be driven, by way of a drive mechanism (not shown) housed in the vehicle 32, to move the load handling device 30 in the X-direction. To achieve movement in the Y-direction, the first set of wheels 34 is lifted clear of the rails 22. and the second set of wheels 36 is lowered into engagement with the second set 22b of rails 22. The drive mechanism can then be used to drive the second set of wheels 36 to move the load handling device 30 in the Y direction.

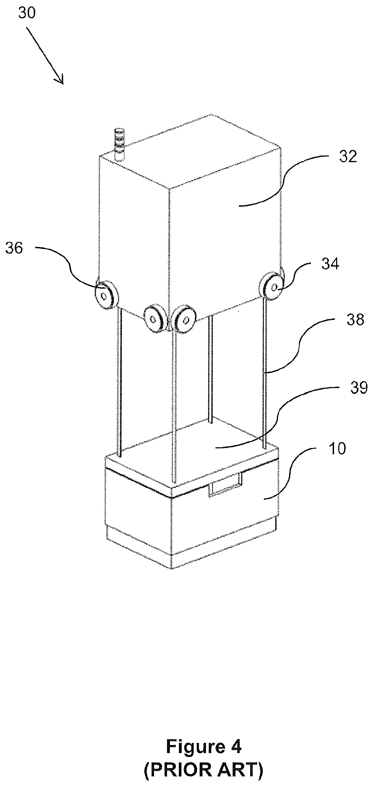

The load handling device 30 is equipped with a lifting device, e.g. a crane mechanism, to lift a storage container from above. The lifting device comprises a winch tether or cable 38 wound on a spool or reel (not shown) and a gripper device 39. The lifting device shown in Figure 4 comprises a set of four lifting tethers 38 extending in a vertical direction. The tethers 38 are connected at or near the respective four corners of the gripper device 39, e.g. a lifting frame, for releasable connection to a storage container 10. For example, a respective tether 38 is arranged at or near each of the four corners of the lifting frame. The gripper device 39 is configured to releasably grip the top of a storage container 10 to lift it from a stack of containers in a storage system of the type shown in Figures 1 and 2. For example, the lifting frame 39 may include pins (not shown) that mate with corresponding holes (not shown) in the rim that forms the top surface of bin 10, and sliding clips (not shown) that are engageable with the rim to grip the bin 10. The clips are driven to engage with the bin 10 by a suitable drive mechanism housed within the lifting frame 39, powered and controlled by signals carried through the cables 38 themselves or a separate control cable (not shown).

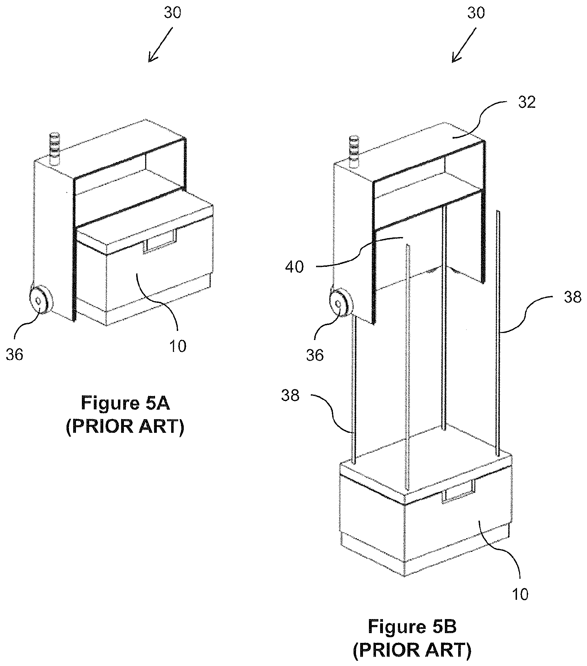

To remove a bin 10 from the top of a stack 12, the load handling device 30 is first moved in the X- and Y-directions to position the gripper device 39 above the stack 12. The gripper device 39 is then lowered vertically in the Z-direction to engage with the bin 10 on the top of the stack 12, as shown in Figures 4 and 5B. The gripper device 39 grips the bin 10, and is then pulled upwards by the cables 38, with the bin 10 attached. At the top of its vertical travel, the bin 10 is held above the rails 22 accommodated within the vehicle body 32. In this way, the load handling device 30 can be moved to a different position in the X-Y plane, carrying the bin 10 along with it, to transport the bin 10 to another location. On reaching the target location (e.g. another stack 12, an access point in the storage system, or a conveyor belt) the bin or container 10 can be lowered from the container receiving portion and released from the grabber device 39. The cables 38 are long enough to allow the load handling device 30 to retrieve and place bins from any level of a stack 12, e.g. including the floor level.

As shown in Figure 4, a plurality of identical load handling devices 30 is provided so that each load handling device 30 can operate simultaneously to increase the system's throughput. The system illustrated in Figure 4 may include specific locations, known as ports, at which bins 10 can be transferred into or out of the system. An additional conveyor system (not shown) is associated with each port so that bins 10 transported to a port by a load handling device 30 can be transferred to another location by the conveyor system, such as a picking station (not shown). Similarly, bins 10 can be moved by the conveyor system to a port from an external location, for example, to a bin-filling station (not shown), and transported to a stack 12 by the load handling devices 30 to replenish the stock in the system.

Each load handling device 30 can lift and move one bin 10 at a time. The load handling device 30 has a container-receiving cavity or recess 40, in its lower part. The recess 40 is sized to accommodate the container 10 when lifted by the lifting mechanism, as shown in Figures 5A and 5B. When in the recess, the container 10 is lifted clear of the rails 22 beneath, so that the vehicle 32 can move laterally to a different grid location.

If it is necessary to retrieve a bin 10b ("target bin") that is not located on the top of a stack 12, then the overlying bins 10a ("non-target bins") must first be moved to allow access to the target bin 10b. This is achieved by an operation referred to hereafter as "digging". Referring to Figure 3, during a digging operation, one of the load handling devices 30 lifts each non-target bin 10a sequentially from the stack 12 containing the target bin 10b and places it in a vacant position within another stack 12. The target bin 10b can then be accessed by the load handling device 30 and moved to a port for further transportation.

Each of the provided load handling devices 30 is remotely operable under the control of a central computer. Each individual bin 10 in the system is also tracked so that the appropriate bins 10 can be retrieved, transported and replaced as necessary. For example, during a digging operation, each non-target bin location is logged so that the non-target bin 10a can be tracked.

Wireless communications and networks may be used to provide the communication infrastructure from the master controller, e.g. via one or more base stations, to one or more load handling devices operative on the grid structure. In response to receiving instructions from the master controller, a controller in the load handling device is configured to control various driving mechanisms to control the movement of the load handling device. For example, the load handling device may be instructed to retrieve a container from a target storage column at a particular location on the grid structure. The instruction can include various movements in the X-Y plane of the grid structure 15. As previously described, once at the target storage column, the lifting mechanism can be operated to grip and lift the storage container 10. Once the container 10 is accommodated in the container-receiving space 40 of the load handling device 30, it is subsequently transported to another location on the grid structure 15, e.g. a "drop-off port". At the drop-off port, the container 10 is lowered to a suitable pick station to allow retrieval of any item in the storage container. Movement of the load handling devices 30 on the grid structure 15 can also involve the load handling devices 30 being instructed to move to a charging station, usually located at the periphery of the grid structure 15.

To manoeuvre the load handling devices 30 on the grid structure 15, each of the load handling devices 30 is equipped with motors for driving the wheels 34, 36. The wheels 34, 36 may be driven via one or more belts connected to the wheels or driven individually by a motor integrated into the wheels. For a single-cell load handling device (where the footprint of the load handling device 30 occupies a single grid cell 17), and the motors for driving the wheels can be integrated into the wheels due to the limited availability of space within the vehicle body. For example, the wheels of a single-cell load handling device are driven by respective hub motors. Each hub motor comprises an outer rotor with a plurality of permanent magnets arranged to rotate about a wheel hub comprising coils forming an inner stator.

The system described with reference to Figures 1 to 4 has many advantages and is suitable for a wide range of storage and retrieval operations. In particular, it allows very dense storage of products and provides a very economical way of storing a wide range of different items in the bins 10 while also allowing reasonably economical access to all of the bins 10 when required for picking.

It is, however, an object of the present disclosure to provide methods and systems for reliably determining the correct location of a load handling device operated remotely in a storage system.

EP 3115320 A1 describes an autonomatic guided transport vehicle including a suspension system to maintain the drive wheels in substantial contact with a travel surface, and a lockout device to lock the suspension system. In this document is disclosed a positioning system for a load handling device in a storage system comprising one or more encoders for a plurality of wheels of the load handling device and storage to store a dynamic model.

### Summary

There is provided a positioning system for a load handling device in a storage system, in accordance with the appended claims.

In general terms, this description introduces systems and methods to estimate the relative position of a bot on a grid-type storage system by leveraging the encoder counts already available in the tractive wheel mechanisms, and optionally also the activations of grid sensors positioned on the grid.

### Brief Description of the Drawings

Embodiments will now be described by way of example only with reference to the accompanying drawings, in which like reference numbers designate the same or corresponding parts, and in which:
Figure 1 is a schematic diagram of a grid framework structure according to a known system;
Figure 2 is a schematic diagram of a top-down view showing a stack of bins arranged within the framework structure of Figure 1;
Figure 3 is a schematic diagram of a known storage system showing load handling devices operative on the grid framework structure;
Figure 4 is a schematic perspective view of a load handling device showing the lifting device gripping a container from above;
Figures 5A and 5B are schematic perspective cutaway views of the load handling device of Figure 4 showing the container receiving space of the load handling device and how it accommodates a container in use;
Figure 6 is a schematic perspective view of a known load handling device showing the X-direction and Y-direction position sensors in the form of "fifth" wheels mounted thereon;
Figure 7 is a schematic perspective view of a load handling device on a portion of the grid structure, according to an embodiment;
Figure 8 is an exploded view of a hub motor usable for driving a wheel of the load handling device about a central axis of rotation, according to an embodiment;
Figure 9 is a schematic diagram of a wheel assembly control and interface architecture according to an embodiment;
Figure 10 is a schematic diagram of communication between the load hand device and the master controller over a network, according to the embodiment;
Figure 11 is a schematic block diagram of a motion control system according to an embodiment;
Figure 12 is a schematic block diagram showing inputs and outputs of a position controller according to an embodiment;
Figure 13 shows a schematic block diagram of a positioning system for a load handling device according to an embodiment; and
Figure 14 shows a flowchart depicting a method of determining a kinematic state of a load handling device in a storage system, according to an embodiment.

### Detailed Description

In storage systems of the type shown in Figures 1 to 3, it is useful to determine an accurate position of a given load handling device 30 operating on the grid structure 15. Each load handling device 30 is sent control signals, e.g. in the form of a motion control profile, to move along a predetermined path from one location to another on the grid structure. For example, a given load handling device 30 may be instructed to move to a particular location in the grid structure 15 to lift a target container from the stack of containers at the particular location. With multiple such devices 30 moving along respective trajectories on the grid structure 15, it is useful to know the accurate position of each given load handling device 30, e.g. relative to the grid structure 15, so that the predetermined trajectories can be monitored in real-time against the "actual" position of the corresponding load handling device 30. For example, the one or more trajectories may be adjusted, and/or the control signals for sending to a device 30 to follow the corresponding trajectory may be adjusted, such that the device 30 reaches the target location sufficiently accurately and/or avoids other devices 30 following their respective trajectories.

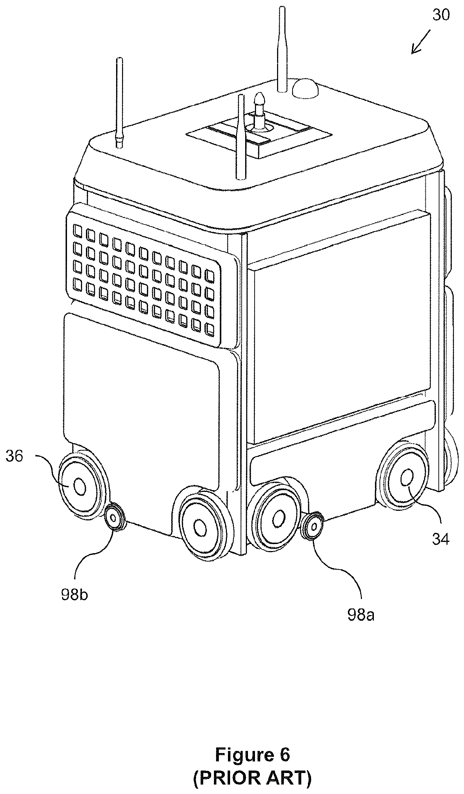

Figure 6 shows a known embodiment of a load handling device 30 with one or more position sensors 98a, 98b to measure the position of the load handling device relative to the grid structure 15. In this particular embodiment, the position sensors 98a,b each comprises a so-called "fifth" wheel in the sense that an additional fifth wheel is present amongst each of the first and second set of wheels for monitoring the position of the load handling device in the first direction and the second direction on the grid structure, respectively.

As shown in Figure 6, a first "fifth" wheel 98a is mounted adjacent to one of the first set of wheels 34 and a second "fifth" wheel 98b is mounted adjacent to one of the second set of wheels 36. The first "fifth" wheel 98a corresponding to a first position sensor is configured to engage with the rails (or "tracks") 22 when the load handling device 30 is travelling in the first direction, such that rotation of the first "fifth" wheel is an indication of the position and direction of travel of the load handling device 30 with respect to time. Similarly, the second "fifth" wheel 98b corresponding to a second position sensor is configured to engage with the track 22 when the load handling device 30 is travelling in the second direction, such that rotation of the second "fifth" wheel is an indication of the position and direction of travel of the load handling device 30 in the second direction with respect to time. The first direction and second direction can respectively be the X- and Y-direction along the tracks 22 as described.

In the known embodiment of Figure 6, each of the one or more position sensors 98a,b comprises an incremental encoder comprising a rotary electromechanical device that generates pulses when the respective "fifth" wheel rotates. For example, a pulse is generated for a predetermined amount of angular rotation of the "fifth" wheel. Thus, the pulses indicate the position and direction of rotation of the "fifth" wheel 98a, 98b, which can be translated into the displacement of the load handling device 30 relative to the grid structure 15. The "fifth" wheel is mounted on an arm and downwardly biased to engage with the tracks 22 of the grid structure 15.

Using the one or more position sensors 98a, 98b to independently monitor the position of the load handling device has some disadvantages. For example, there is an inherent component cost, which is compounded by the failure of at least one of the sensors 98a, 98b causing loss of the kinematic reference for the load handling device in at least one direction on the grid structure 15. There can also be issues with the accuracy of the measurements from the sensors 98a, 98b, e.g. caused by disturbances or imperfections in the tracks 22.

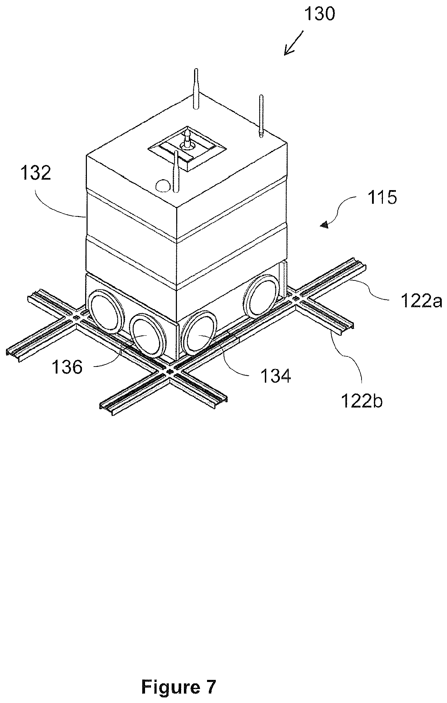

Figure 7 shows an example of a load handling device incorporating the present positioning system, whereby the so-called "fifth" wheels are not required and are thus absent. Other features are incorporated per the example load handling device 30 described with reference to Figures 3 to 6, with their respective reference numerals incremented by 100 - the corresponding description applies. For example, the load handling device 130 of the present example includes a vehicle body 132 equipped with a lifting mechanism (not shown) to lift a container from a stack of containers in a storage system of the type described with reference to Figures 1 and 3.

The vehicle body 132 comprises an upper part and a lower part. The lower part comprises a wheel assembly comprising two sets of wheels 134, 136 that run on the grid framework 115 structure of such a storage system. For explanation, the two sets of wheels are distinguished as a first set of wheels 134 and a second set of wheels 136. The first 134 and second 136 sets of wheels are arranged around the periphery of the load handling device 130. The wheels in this example are arranged outside the vehicle body 132, but in other examples may be housed within the vehicle body 132. Whilst the particular example drawn in Figure 7 shows multiple pairs of wheels mounted to opposing sides of the vehicle body, the present invention is not restricted to the load handling device being mounted on pairs of wheels on either side of the vehicle body: for example, instead of pairs of wheels, stability of the load handling device can be achieved by at least one wheel mounted on opposing sides of the vehicle body 132, e.g. arranged diagonally opposite each other. Thus, the first and second set of wheels 134, 136 each comprises at least one wheel mounted to opposing sides of the vehicle body. They are diagonally opposed to each other in this alternative arrangement.

In the example of Figure 7, the load handling device has a container-receiving space arranged within the vehicle body 132, e.g. as described in WO2015/019055 (Ocado Innovation Limited). However, in other examples, the vehicle body 132 comprises a cantilever, e.g. as taught in WO2019/238702 (Autostore Technology AS), in which case the container-receiving space is located below a cantilever of the load handling device 130. In such an embodiment, the gripper device is hoisted by a cantilever. The gripper device can engage and lift a container from a stack into the container receiving space below the cantilever.

The upper part of the vehicle body 132 may house most of the bulky components of the load handling device 130 shown in Figure 7. Typically, the upper part of the vehicle houses a driving mechanism for driving the lifting mechanism together with an on-board rechargeable power source for providing power to the said driving and lifting mechanisms. The rechargeable power source can be any appropriate battery, such as, but not limited to, a lithium battery or a capacitor.

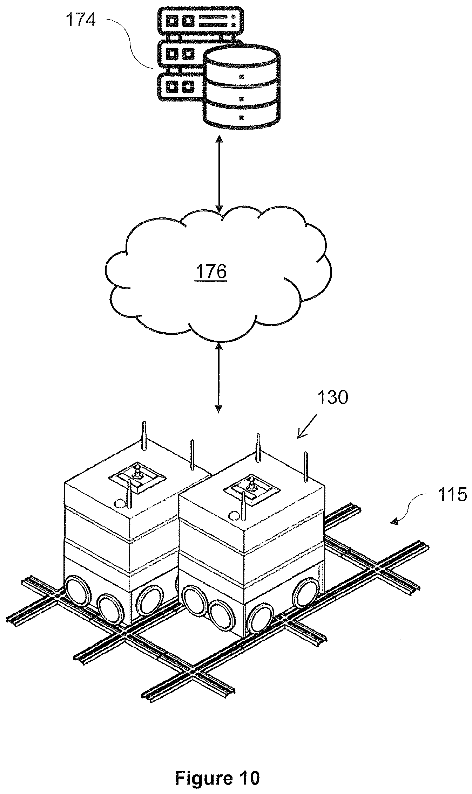

The load handling device 130 in the present example shown in Figure 7 has a footprint that occupies a single grid cell of the grid structure 115. Thus, where multiple such load handling devices 130 are operated on the grid structure 115, a given load handling device occupying one grid space does not obstruct another load handling device occupying or traversing adjacent grid spaces - e.g. in the example shown in Figure 10.

To change between the orthogonal directions on the grid structure 115, at least one of the wheelsets is configured to move vertically to change which of the X-direction and Y-direction wheelsets are engaged with the tracks. For example, the X-direction wheelsets are fixed and the Y-direction wheelsets are configured to either lift up to bring the X-direction wheelsets into contact with the track or to drop down to lift the X-direction wheelsets off the track. Alternatively, the Y-direction wheelsets are fixed and the X-direction wheelsets move up and down to change which wheelsets engage with the tracks.

In some examples, each of the first 134 and second 136 sets of wheels mounted on the vehicle body 132 is arranged to move vertically to lift clear of their respective tracks or rails. For example, to change direction on the grid structure 115 (e.g. to the X-direction), the first set of wheels 134 are lifted clear of the first set of grid members or tracks 122a, and the second sets of wheels 136 are engaged with the second set of grid members or tracks 122b. A driving mechanism (not shown) such as a motor drives either the first 134 or the second 136 set of wheels in the X-direction or the Y-direction on the grid structure 115. In the particular example of Figure 7, each wheel of the first 134 and second 136 sets of wheels are individually driven by hub motors to provide four-wheel drive capability of the load handling device 130 on the grid structure 115. In other words, all of the wheels in the first and second set of wheels are driven by individual hub motors. This allows the load handling device 130 to travel along the rails or tracks 122a, 122b on the grid structure 115 should any one of the wheels in the set 134, 136 slip on the rail or track.

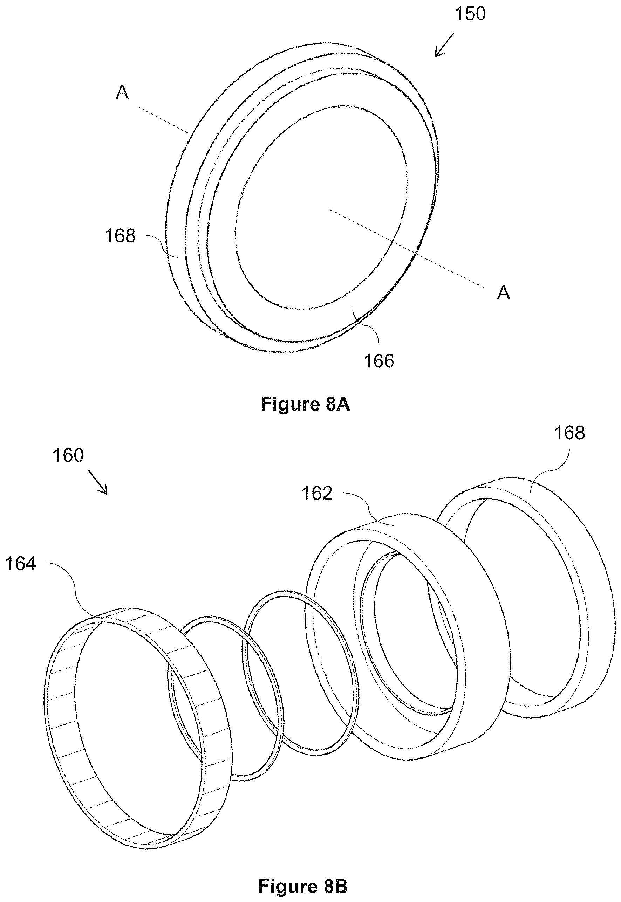

In more detail, the hub motor 160 shown in Figures 8A and 8B comprises an outer rotor 162. The outer rotor 162 has an outer surface that is arranged to engage with the grid structure (e.g. tracks). The inner surface, comprising ring-shaped permanent magnets 164, is arranged to rotate around a wheel hub (or "inner hub" 166) comprising the stator of the hub motor 160. Typically, the stator comprises the coils (also known as "windings") of the hub motor. To drive each wheel 150 of the first or second set of wheels and thus move the load handling device on the grid structure, the outer rotor 162 of the hub motor 160 is arranged to rotate about an axis of rotation A-A corresponding to the central axis of a respective wheel. The outer surface of the rotor 162 may comprise a tyre 168 for engaging with the tracks or rails. In the example shown in Figure 8B, the outer rotor 162 rotates about its rotational axis on bearings (not shown) and has the permanent magnets 164 bonded to its inner surface. Each of the wheels 150 is coupled to the vehicle body 132 of the load handling device 130 by a coupling of the inner hub 166, comprising the stator of the hub motor, to the vehicle body 132 to allow the outer rotor 162 to rotate relative to the wheel hub 166. This type of hub motor is typically known as an outer-rotor hub motor.

Other types of hub motor are usable as the hub motor 160 for the wheels 150, such as an inner-rotor motor or an axial-flux motor. The inner-rotor motor has the stator winding on its outer shell, and the rotor sits inside the stator and connects to the shaft. Spokes typically connect the wheel to the rotor shaft. Inner-rotation motors typically have a small magnet volume but a larger volume of copper stator windings than outer-rotation motors. An axial-flux motor, in contrast, has the stator windings typically sandwiched between sets of magnets in a non-radial arrangement: the gap between the rotor and stator, and therefore the direction of magnetic flux between the two, is aligned parallel with the axis of rotation, rather than radially.

Whilst the drive mechanism of each of the wheels 150 in the preceding examples comprises a hub motor, other means to drive the wheels are applicable in other examples. For example, a pair of wheels at the front and back on either side of the load handling device could be driven by one or more motors connected to a suitable pulley or gear mechanism. In other examples, the drive mechanism for the wheels 150 comprises a belt drive mechanism.

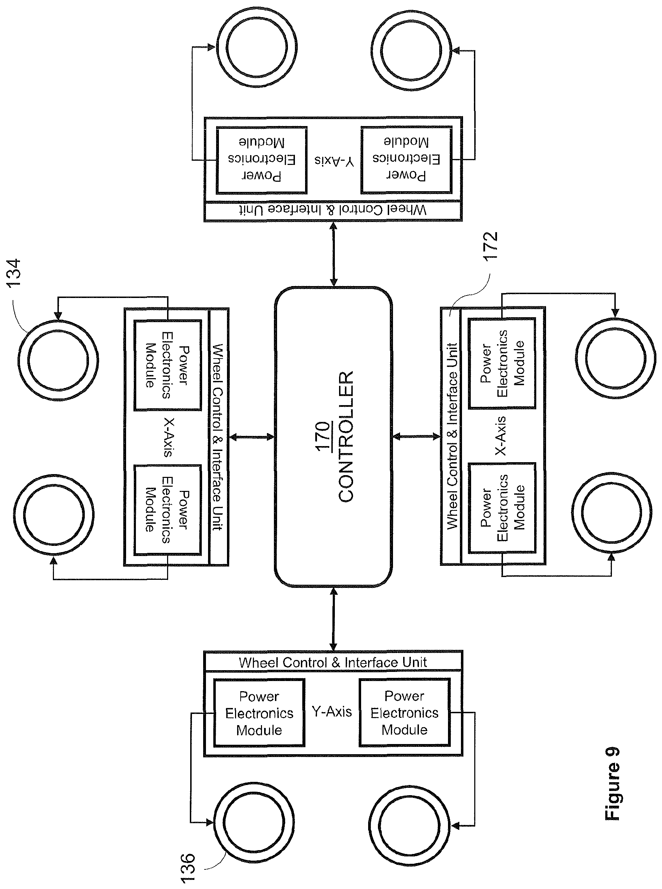

In the block diagram of the wheel assembly shown in Figure 9, each pair of wheels of the first 134 and second 136 sets of wheels is instructed to rotate about their respective axes of rotation by a control module (or "controller" 170). In this example, the control module 170 comprises a computer system with one or more processors and memory storing instructions that, when executed by the one or more processors, cause the one or more processors to instruct the first or second set of wheels to rotate about their respective axes of rotation. The memory may be any storage device commonly known in the art, e.g. a RAM, computer-readable medium, magnetic storage medium, optical storage medium, or another electronic storage medium that can be used to store data. The one or more processing device may be any processing device known in the art, e.g. a microprocessor. The driving mechanism and the wheel positioning of each of the wheels of the first 134 and second 136 set of wheels are communicatively coupled to the control module 170 via any suitable communication interface unit 172, e.g. any wired or wireless communication interface known in the art.

The controller 170 sends control instructions to the drive mechanism, which translates the control instructions into suitable driving output signals to the wheel motors, facilitating the controlled movement of the load handling device 130 on the tracks 122a, 122b of the grid structure 115. The control signals can be provided directly to the wheel motors or to an intermediate motor drive that controls the speed and direction of the wheel motors by varying the power delivered to the wheel motors.

When the controller 170 determines that the drive mechanism is to move the load handling device 130 from its current position to a new position or to alter its velocity, the controller 170 generates a trajectory (otherwise known as a "motion control profile") which is translated by the drive mechanism into suitable control signals. The new position may be a target position or commanded stop position, for example. The motion control profile defines the kinematic state of the load handling device 130, such as its velocity, acceleration, jerk and/or position over time as the load handling device 130 moves from its current state to the target position. The jerk (or "jolt") is the rate at which the load handling device's acceleration changes with respect to time, i.e. the first time derivative of the acceleration. The current position could be from a standstill or rest on the grid structure 115, in which case both the initial velocity and acceleration of the load handling device 130 is substantially zero. Alternatively, the load handling device 130 may be in motion at the current position, in which case the load handling device 130 has an initial velocity greater than zero.

In examples, the target position is a desired storage location or grid cell on the grid structure 115, e.g. for retrieving or depositing a storage container. In other examples, the target position is a position or grid cell on the grid structure 115 near a charging point, e.g., when the load handling device 130 is instructed to recharge the rechargeable power source. Typically, such charging points are located around the periphery of the grid structure 115.

Once a motion control profile is generated, the controller translates the motion control profile into appropriate control signals for moving the load handling device through the trajectory defined by the motion control profile. Multiple segments (or "stages") of a motion control profile may be calculated, e.g. based on one or more predetermined constraints. Such constraints may correspond to the mechanical limitations of the drive mechanism, for example. The one or more predetermined constraints include, but are not limited to, a maximum velocity, a maximum acceleration, and a maximum deceleration. For example, the load handling device 130 is expected to travel at speeds up to four metres per second (m/s) and accelerate at two metres per second squared (m/s²). Given these constraints and the commanded target position, the controller calculates the motion control profile to carry out the desired move. The desired move may include a plurality of positions in the X- and Y-directions on the grid structure 115, e.g. blended or sequentially executed, in order for the load handling device to reach the target location, e.g. corresponding to the desired storage column. Each of the plurality of positions comprises a single move in either the X-direction or Y-direction on the grid structure, for example. For the present description, the terms "commanded velocity" and "velocity constraint" are used interchangeably, as are the terms "commanded acceleration" and "acceleration constraint".

So-called "point-to-point" movement in the present description refers to movement from a start position to a target position. The final acceleration and velocity are taken to be zero when the load handling device arrives at a programmed destination or the target position.

In examples, inputs to the controller 170 are received via a master controller 174. The controller may be communicatively linked to the master controller 174 over a network 176 as shown in Figure 10. The controller in the example of Figure 10 is incorporated into a load handling device 130. The network 176 can be any of the various types, including a LAN (Local Area Network), WAN (Wide Area Network), Internet or an Intranet. One or more base stations (not shown) may transmit the input information to the controller. In the particular embodiment of the present invention, the inputs can include the one or more constraints and the commanded position or target position on the grid structure. The transmission of multiple inputs to the controller may be done independently. For example, the master controller 174 may communicate the commanded position and the one or more constraints separately, e.g. to a trajectory generator stored within the controller of the load handling device 130.

The motion control profile is generated or calculated (e.g. automatically by the controller), e.g. based on the received one or more constraints and commanded position corresponding to the desired position on the grid structure. In examples, the motion control profile (or "trajectory") includes a collection of position, speed, acceleration, and/or jerk signals. The trajectory is terminated (or reaches its endpoint) when the commanded position is attained and the remaining signals (speed, acceleration, jerk) are zero, for example.

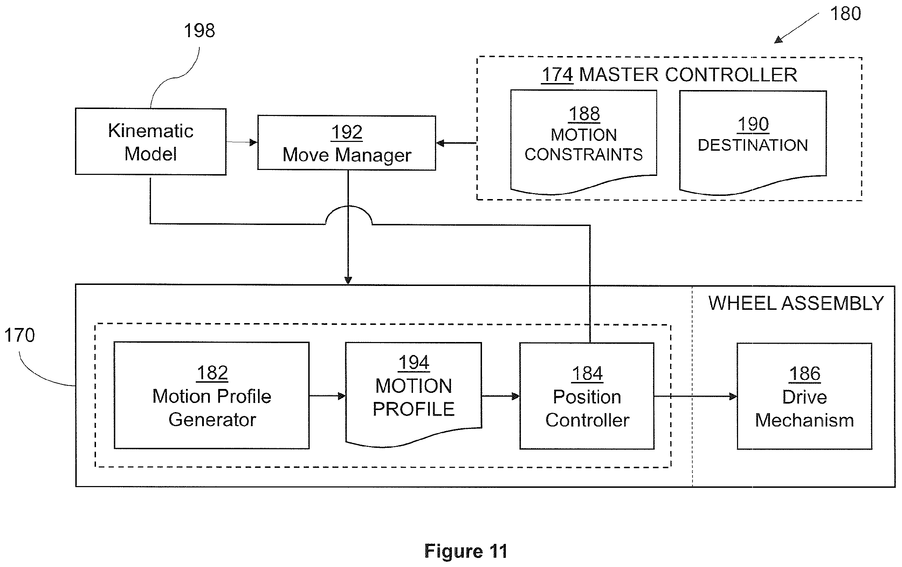

Figure 11 shows a block diagram illustrating the inputs and outputs of a position controller according to an example. Motion control profile data generated by the trajectory generation are communicated to the position controller 184 where they are translated into control signals to drive the wheels of the wheel assembly. In accordance with the motion control profile, the position controller 184 varies the power to the drive mechanism to vary the speed of the load handling device 130 relative to the grid structure 115. As with the motion control generator, the position controller 184 can be a functional component residing with the controller 170 or, alternatively, a separate component to the motion control generator 182 having its own control system. For example, pairs of wheels of the wheel assembly can be connected to local controllers and be configured to translate motion control signals from the motion control generator. Translation of the motion control signals includes, but is not limited to, converting the motion control data into appropriate torque control signals for driving the respective drive mechanisms or motors of the wheels.

As discussed above, the motion control profile defines the trajectory of a point-to-point move of the load handling device 130 relative to the grid structure 115 over a time period, e.g. in terms of one or more of: a position reference, a velocity reference, an acceleration reference, and a jerk reference. These references represent functional calculations by the trajectory generator defining how respective motion attributes of the drive mechanism will be controlled as a function of time for a given point-to-point move. The references are mathematically related to one another as derivatives with respect to time. Translation of the motion control profile into control signals, which instruct the load handling device 130 to perform the desired point-to-point move in accordance with the motion control profile, involves the position controller 184 generating a feed-forward signal from the motion control profile, e.g. based on the acceleration reference derived from the motion control profile. The one or more of the position reference, velocity reference, acceleration reference, and jerk reference may be referred to as an odometry reference or kinematic reference representative of the point-to-point move of the load handling device 30 over a given time period.

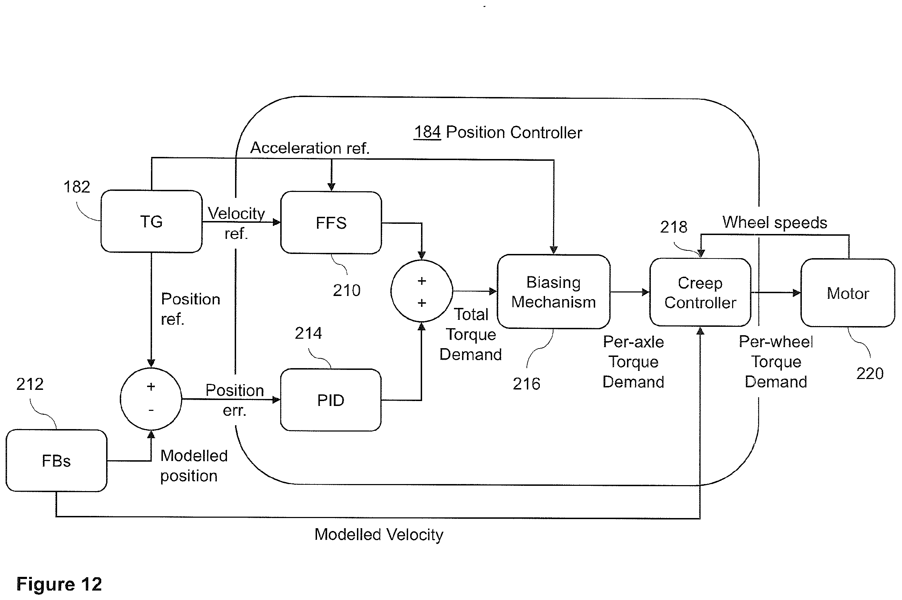

Figure 12 shows an example architecture of the position controller 184 for translating signals from the trajectory generator 182 to the drive mechanism of the load handling device. With the mass of the load handling device as a predetermined, e.g. estimated, value, the feed-forward signal 210 represents a calculated torque demand, e.g. proportional to the acceleration reference derived from the motion control profile, more specifically to the time derivative of the velocity reference. The mass of the load handling device with a payload can be estimated, for example, using a current feedback from the controller or driver of the lifting device used to hoist the tote containing a payload of items. This can be incorporated with the initial mass of the load handling device, e.g. including the lifting device having cables 38 and a gripper device 39, to yield an estimated total mass of the load handling device with payload.

The feed-forward signal 210 can be translated into appropriate signals to drive the wheels of the wheel assembly. However, in order to ensure that the point-to-point move of the load handling device on the grid structure aligns with the trajectory segments of the motion control profile, the calculated feed-forward signal 210 is compensated by a feedback signal 212 indicating the actual kinematic state of the load handling device relative to the grid structure. The kinematic state of the load handling device on the grid structure can include, but is not limited to, a position and a velocity of the load handling device relative to the grid structure. The velocity of the load handling device can be derived from the first derivative of its position with respect to time, for example.

Based on the feedback signal 212, the position controller 184 can adjust or compensate the controlling signal, determined based on the motion profile 194 from the trajectory generator 182, to ensure that the load handling device moves according to the motion control profile as closely as possible.

In the present system, the feedback signals 212 are generated using a kinematic model 198 instead of one or more position sensors on the load handling device (which would be fed back to the position controller to reflect the "true" state of the load handling device relative to the grid structure). As described above, using such a kinematic model 198 in place of the one or more position sensors allows for a feedback reference of the kinematic state of the load handling device, to help with controlling the positioning in accordance with a generated trajectory, without the disadvantages associated with using physical sensors mounted on the load handling device. More explanation of determining the kinematic state of the load handling device using such a kinematic model 198, e.g. in place of the one or more position sensors, is provided below.

In response to receiving data signals from the kinematic model 198, the position controller 184 can be instructed to re-generate one or more trajectory segments of the motion control profile 194, e.g. by varying one or more manipulated variables, to ensure that the load handling device arrives at its commanded target position on the grid structure.

In examples, the feedback signal 212 from the kinematic model 198 is combined with the feedforward signal 210 to generate a total torque demand for the wheels (or the drive mechanism driving the wheels). A comparison is made between the trajectory position derived from the motion control profile and the position determined from the kinematic model 198. The comparison represents a positional error, i.e. the difference between the trajectory position reference and the modelled position as a function of time. The positional error is fed into a PID (proportional, integral and derivative) controller (or PI controller) 214, which corrects the position to the setpoint, represented by the motion control profile. The correction from the PID or PI controller 214 is combined with the feedforward signal 210 to generate a total torque demand.

As shown in the communication paths of Figure 12, both the "acceleration feedforward" signal and the "velocity feedforward" signal are combined in the feedforward calculation. They may be stored in a look-up table. In practice, the acceleration feedforward and velocity feedforward are summed together along with a proportionality constant, e.g. a zero-order torque demand, which is a fixed value (its sign being that of the trajectory velocity). The magnitudes of the acceleration feedforward torque demand and the velocity feedforward torque demand are determined from the generated motion control profile or trajectory.

In one example, the feedforward torque demand is calculated as follows: $Total Torque Demand = Feedforward Torque Demand + Feedback Torque Demand ;$ where: 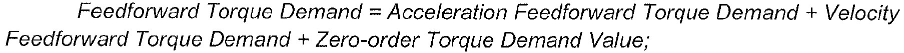 Feedforward Torque Demand = Acceleration Feedforward Torque Demand + Velocity Feedforward Torque Demand + Zero-order Torque Demand Value; where: 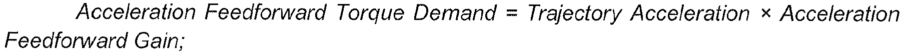 Acceleration Feedforward Torque Demand = Trajectory Acceleration × Acceleration Feedforward Gain; 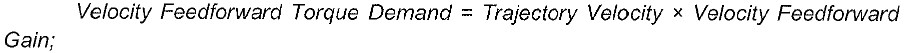 Velocity Feedforward Torque Demand = Trajectory Velocity × Velocity Feedforward Gain; 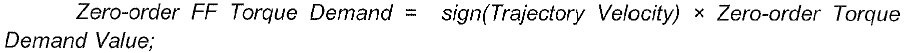 Zero-order FF Torque Demand = sign(Trajectory Velocity) × Zero-order Torque Demand Value; where the values of the following variables are empirically determined:
*Acceleration Feedforward Gain* is a value that depends on the estimated total mass of the load handling device, inclusive of the container and its contents, such that it has a higher gain value when the load handling device carries a heavier container.

*Velocity Feedforward Gain* also depends on the estimated total mass of the load handling device.

*Zero-order Torque Demand Value* is the value of total torque demand required to keep the load handling device moving at a constant, near-zero velocity, i.e. it is a proportionality factor.

These three components, *acceleration feedforward, velocity feedforward* and *zero-order torque demand value,* are summed together to make up the feedforward torque demand and stored in a look-up table. When compensating the calculated feedforward torque demand with the feedback torque signal, the controller retrieves the feedforward torque demand from the look-up table to combine with the feedback torque measurement.

As described above, the total calculated demand is translated to appropriate controlling signals to drive the wheels. In examples, the total torque demand is shared between the first or the second set of wheels, depending on which of the first and second sets of wheels are engaged with the grid structure. As also described in examples, each wheel of the first and second set of wheels may be driven individually by hub motors 220. The first set of wheels comprises a pair of wheels at the front of the body and a pair of wheels at the back of the body. A similar pair of wheels are present for the second set of the wheels, i.e. a first and second pair of wheels on either side of the body of the load handling device. In operation, the pairs of wheels are driven in synchronisation, e.g. as if on "virtual" or "imaginary" axles. For example, the front pair of wheels are driven in synchronisation as if driven on the same axle, and the rear pair of wheels are similarly driven in synchronisation as if driven on the same axle. The same principle applies to the second set of wheels, even though individual hub motors drive them. Equally and applicably, all four wheels of the first set of wheels may be driven in synchronisation, and similarly, all four wheels of the second set of wheels may be driven in synchronisation. The advantage of driving the wheels of the wheel assembly individually by hub motors is that the torque applied to the wheels can be distributed in different amounts to the wheels, which can be helpful during slippage of any of the wheels.

In examples, the torque demand derived from the motor control profile, or the compensated total torque demand, is distributed between the wheels of the wheel assembly by a biasing mechanism 216. The biasing mechanism 216 divides the total torque demand between the front and rear wheel pairs, e.g. "axles", to account for any weight transfer of the load handling device on the grid structure. For example, when the load handling device is accelerating on the grid structure, a greater proportion of the calculated total torque demand may be transferred to the front "axle". Conversely, when the load handling device decelerates on the grid structure, the total torque demand may be transferred more to the rear "axle". Thus, the biasing mechanism can vary the amount of torque to the first and rear "axles" to transfer the weight of the load handling device between the front portion and rear portion of the load handling device accordingly when accelerating or decelerating on the grid structure.

In examples, the biasing mechanism 216 applies a differential torque demand to the wheels, more specifically to the motors driving the wheels, in accordance with the trajectory acceleration reference of the motion control profile. The trajectory acceleration reference and/or the trajectory velocity reference of the motion control profile provides an indication or a reference point as to whether the load handling device is accelerating or decelerating on the grid structure. In other words, the differential torque applied to the wheels follows the trajectory acceleration reference of the motion control profile, i.e. there is a proportional relationship between the distribution of the torque to the wheels and the trajectory acceleration reference of the motion control profile. In response to signals from the motion control profile generator indicating the load handling device is to accelerate, the biasing mechanism 216 selectively transfers more of the calculated total torque demand to the front axle than the rear axle. Conversely, when instructed to decelerate, the total torque demand is shifted to the rear axle, or the total torque demand is reduced, to provide a "braking" force. Equally, when cruising on the grid structure, the total torque demand may be substantially equally divided between the front and rear "axles".

As well as the differential torque applied to the front and rear wheel "axles", the torque demand communicated to the wheel motors can also be controlled on either side of the body of the load handling device, e.g. to control the yawing or turning of the load handling device on the grid structure. For example, depending on the direction of travel of the load handling device on the grid structure, the torque demand can be used to control the speed to the left set or right set of wheels and, thereby, to control the yawing or turning angle of the load handling device on the grid structure. In some instances, with the arrangement of the grid members extending in transverse (X-Y) directions, the differential torque applied to the left and right wheels is controlled to prevent the load handling device from yawing or turning on the tracks i.e. to travel in a substantially straight line.

In addition to translating the motion control profile to control signals for driving the drive mechanism, the biasing mechanism 216 can also be configured to control the slip of the wheels on the tracks as well as periodically compensating the motion control profile in response to receiving position signals from the kinematic model (in place of one or more position sensors mounted to the load handling device) and/or one or more positional track sensors.

Inplace of the one or more position sensors, the kinematic model can also determine a slip of any one of the first and second sets of wheels on the tracks. This is shown in Figure 12 as a separate slip component 218 within the positional controller 184.

Slippage of the wheels can occur when the rotational speed of any of the wheels is greater than a velocity component of the kinematic state of the load handling device on the grid structure. The kinematic state of the load handling device on the grid structure is determined using the kinematic model 198. For load handling devices 30 with position sensors 98a, 98b, the velocity component of the kinematic state is derivable from a first derivative of the position component of the kinematic state, as determined by the one or more position sensors, as a function of time - e.g. the rotational speed of the first or second "fifth" wheel depending on whether the load handling device is travelling in the first direction or the second direction.

In examples, the individual rotational speed of each wheel of the first and the second sets of wheels is determined by one or more wheel encoders disposed adjacent to each wheel. The one or more wheel encoders can be an incremental encoder comprising a rotary electromechanical device that generates pulses indicative of the rotational speed of the wheel. An example wheel encoder comprises a magnetic sensor, e.g. a Hall Effect sensor, that can measure the strength of a magnetic field and a ring magnet attached to the motor shaft. When the motor rotates the wheel, it also rotates the ring magnet. The magnetic sensor positioned near the ring detects changes in the magnetic field as the ring magnet rotates. The sensor can count incrementally how many times the motor has rotated. As the ring magnet completes one full rotation, the magnetic sensor detects a set number of changes (e.g. pulses or "ticks") in the magnetic field as each magnetic pole of the ring magnet passes by the sensor. For a ring magnet with four pairs of magnetic poles, the magnetic sensor would count four pulses during one full rotation, for example. Each rotation of the motor also turns the wheel a given angular rotation, e.g. a certain number of degrees. With this information, e.g. the gearing ratio of the motor and wheel, the number of pulses counted by the wheel encoder representing one revolution of the wheel can be calculated. The expected distance travelled per pulse or rotation can also be determined using the wheel circumference.

Another example of a rotary wheel encoder is an optical encoder. A disc with transparent and opaque areas is attached to the motor shaft and arranged between a light source and a photodetector array that reads an optical pattern that results from the disc's angular position at any given time. A further example is a capacitive rotary encoder in which an asymmetrically shaped disc is rotated within the encoder between two electrodes. Changes in the capacitance between the electrodes can be measured and used to determine an angular value.

In examples, a slip control manager manages the slip of each of the wheels of the wheel assembly by individually comparing the rotational speed of the wheels to the kinematic state of the load handling device on the grid structure determined from the kinematic model in place of the first or second "fifth" wheels. In the example shown in the schematic block diagram of Figure 12, the slip control manager resides within the position controller. Suppose the rotational speed of a given wheel is greater than the velocity component of the kinematic state of the load handling device on the grid structure. In that case, the slip control manager removes or at least reduces the torque to that wheel by controlling the biasing of the torque demand to that wheel until the rotational speed of the wheel catches up with the kinematic state of the load handling device. For example, via the biasing mechanism, the position controller can alter the torque demand on the slipping wheel, i.e. to reduce or even remove the torque demand on the wheel, to reduce the rotational speed of the slipping wheel. In such cases, the rotation of the wheel can become more passive. Alternatively, the slip control manager can redistribute the torque from the slipping wheel to the other wheels to balance the speed of the wheels of the wheel assembly to match the kinematic state of the load handling device on the grid structure.

It will be appreciated that, alternatively, the above described slip control manager may be used in conjunction with the first or second "fifth" wheels. In this way, the rotational speed of the wheels can be directly determined by the output of the "fifth" wheels.

In either case, with "fifth" wheels or without, the slip control manager may be arranged to reduce the torque on the wheel which is experiencing slip. For example, when a first wheel is detected to be experiencing slip, the slip control manager may reduce the torque demand for that particular wheel to zero torque. All the other wheels being utilised but not experiencing slip have their torque levels maintained (i.e. not adjusted). Although in this example the slipping wheel has zero torque applied, other values may be used, for example, the torque demand for the slipping wheel may be reduced to 20% of the original value. One disadvantage of this method of slip control is that it induces an undesired torque on the load handling device, causing it to skew in its trajectory to one side or the other. Where slip events are infrequent and short lasting the undesired torque can be effectively ignored given the undesired torque experienced by the load handling device is minimal.

However, for longer lasting slip events the undesired torque experienced by the load handling device may become problematic. To that end, the slip control manager may instead be arranged to apply slip control on a "virtual" or "imaginary" axle basis, similar to that described previously with regard to biasing the torque between a front virtual axle and a rear virtual axle. In particular, when slip on one particular wheel is detected (whether using a "fifth wheel" or not), the slip control manager is arranged to reduce the torque demand for both of the wheels on the virtual axle. For example, if a rear right wheel of the load handling device experiences a slip event then the torque demand for both of the rear right wheel and the rear left wheel (the rear left wheel being on the same virtual axle as the rear right wheel) are reduced. Preferably, the reduction in torque demand to the wheels on the virtual axle is identical. In this way, the load handling device no longer experiences the undesired torque of the previous slip control method because the torque reduction is equal on both sides of the load handling device. In one example, where the rear right wheel experiences a slip event, the torque demand to the rear virtual axle may be reduced to zero. However, such a dramatic reduction in torque on the load handling device may cause a sudden speed reduction for the load handling device. Alternatively, where the rear right wheel experiences a slip event, the torque demand to the rear virtual axle may be reduced to 20% of its original value. Accordingly, both the rear right wheel and rear left wheel experience a reduction in torque demand to 20% of their original value. In this way, the reduction in speed is not as dramatic and the load handling device may remain on its movement plan.

Additionally, the slip control manager may be further arranged to apply the lost torque to the virtual axle not undergoing a slip event. For example, where the rear right wheel experiences a slip event, the torque demand to the rear virtual axle may be reduced to 20% of its original value. In other words, the torque demand to the individual wheels on the rear virtual axle is reduced to 20% of their original value. However, the torque demand removed from this virtual axle (80% of its original value) may be added to the front axle, in other words each of the front left and front right wheels has added to their torque demand a proportion of the torque demand removed from the rear virtual axle. Accordingly, whilst the rear virtual axle is reduced to 20% of its original value, the front virtual axle has its torque demand increased by torque demand removed from the rear virtual axle. In this way, the speed reduction for the load handling device as a whole is mitigated.

It is to be understood that the architecture shown in Figure 12 is only intended to be an example and other arrangements of the components of the position controller 184 are within the scope of the present invention. For example, the position controller 184 may be integrated into the controller 182 for generating the motion control profile or trajectory instead of being a separate controller.

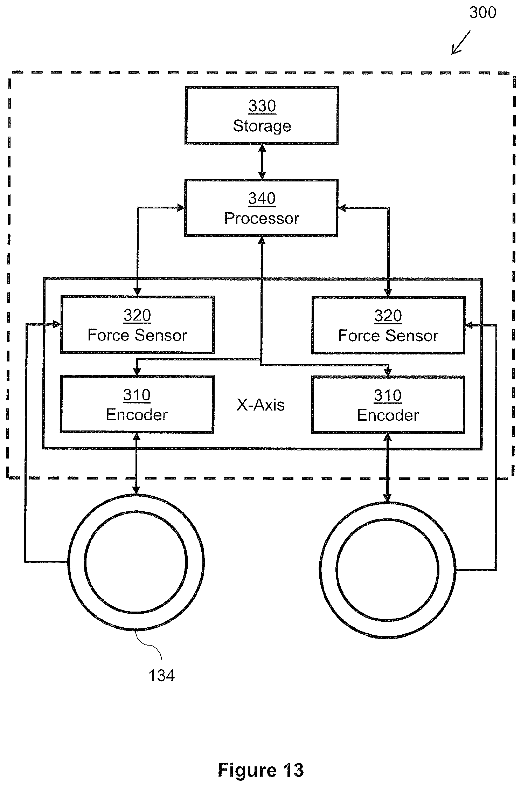

Figure 13 shows a schematic diagram of a positioning system for a load handling device according to examples. The positioning system 300 includes one or more encoders 310 for a plurality of wheels of the load handling device, which are previously described. The one or more encoders are within the load handling device in this example. In Figure 13, only a pair of wheels 134 for moving the load handling device 130 in the X-direction on the grid structure 115 are shown. However, the complete set of wheels for each of the X- and Y-directions, e.g. the first set 134 and second set 136 of wheels described in earlier examples, can be included.

The positioning system 300 also includes, in examples, one or more force sensors for the respective wheels 134 of the load handling device. The one or more force sensors are configured to detect a load on a corresponding wheel, for example. The one or more force sensors may comprise a force transducer that converts an applied force, e.g. a weight loaded onto a wheel, into a linear electrical signal via measurement of movement in the wheel assembly structure using a force-sensing resistor.

In other examples, the positioning system 300 includes one or more force estimators configured to estimate a load on a corresponding wheel. For example, the load on a corresponding wheel may be estimated taking into account the weight transfer during acceleration and deceleration, e.g. based on a mass of the load handling device including an estimated mass of a tote and its payload when carried by the load handling device, using methods known by a person skilled in the art. For example, considering front and rear virtual axles for the front and rear wheel pairs, the vertical loads on the front axle *Z*₁ and the rear axle *Z*₂ may be determined as: ${Z}_{1} = {Z}_{1 , 0} + {Z}_{1 , a} + ΔZ ;$ ${Z}_{2} = {Z}_{2 , 0} + {Z}_{2 , a} + ΔZ .$

The initial load on the front axle *Z*_{1,0} is determinable based on the mass m of the load handling device, e.g. including any tote mass and payload being carried, a distance *a*₂ between the rear axle and the centre of mass of the load handling device, and the wheelbase *l*: *Z*_{1,0} = *mg · a*₂/*l*. Similarly, the initial load on the rear axle *Z*_{2,0} is determinable using instead a distance *a*₁ between the rear axle and the centre of mass of the load handling device: *Z*_{2,0} = *mg* · *a*₁/*l*. The middle terms in the axle loading equations represent the aerodynamic drag forces *Z*_{1,}*ₐ =* -*Z*_{2,*a*} which can be determined, for example, by the expression $\frac{1}{2} {ρv}^{2} S ⋅ C$ where *p* is the fluid (air) density, v is the velocity of the load handling device, *S* is a reference area of a face of the load handling device, and C is a shape coefficient e.g. for a rectangular cross section of the load handling device. Finally, the longitudinal load transfer *ΔZ* is determinable based on the acceleration *a* of the load handling device and the height *h* of the centre of mass as: *ΔZ* = *-ma · h*/*l.*

The positioning system 300 includes storage 330 to store a trained model for determining creep values for the load handling device based at least on a given vertical load on a given wheel of the load handling device. The storage 330 may be a random-access memory (RAM) such as DDR-SDRAM (double data rate synchronous dynamic random-access memory). In other examples, the storage 330 may include non-volatile memory such as Read-Only Memory (ROM) or a solid-state drive (SSD) such as Flash memory. The storage 330 in some cases includes other storage media, e.g. magnetic, optical or tape media, a compact disc (CD), a digital versatile disc (DVD) or other data storage media. The storage 330 may be removable or non-removable from the data positioning system 300.

In the context of a wheel moving on a rail, creep is related to a difference between the wheel's rotational speed and its linear speed. For example, the contact area between the wheel and the rail, which is typically elliptical, can be divided into a stick (no-slip) region and a slip region. Longitudinal creep (or "micro slip") and tangential (tractive) forces arise due to the slip that occurs in the trailing region of the contact patch. As the tractive force increases, the slip region increases, and the stick region decreases - resulting in contact with rolling and sliding. Creep forces act in the plane of the contact patch and are related to the friction between the wheel and rail. The distortion in the wheel and rail is small and localised, but the forces that arise can be significant. In addition to the distortion due to the weight, both the wheel and rail distort when braking and accelerating forces are applied, and when the vehicle is subjected to lateral forces.

For a creeping force to develop, a certain amount of (micro-) slip is required. In some instances, the tangential forces depend on the normal load, friction conditions and relative motion between the contacting surfaces. These tangential forces distort the region where they first come into contact, followed by the region of slippage. The net result is that (a) during traction, the wheel does not advance as far as would be expected from rolling contact, and (b) during braking, it advances further. This mix of elastic distortion and local slipping is known as "creep" (separate from the creep of materials under constant load). The creep in this context, in terms of displacement, is given by *ξ = (x* - *s*)/*s* = *Δs*/*s*, where *x* is the actual displacement of the vehicle and *s* is the rolling displacement.

Similarly, in terms of velocities, for a free-rolling wheel, an expected linear velocity (in m/s) based on the angular velocity *ω* (rad/s) is given by the multiplication *r* · *ω* where *r* is the wheel radius (m). There should be a positive velocity delta for a positive tangential force, i.e. *Δv =* (*r* · *ω*) - v. The relation between this velocity difference and the linear velocity is also given by the velocity creep: *σ = Δv*/*v* which is dimensionless. As such, the velocity (or "longitudinal") creep can be expressed as the rate *σ* ∈ [0,1], given by: $σ = \left\{\begin{matrix}1 - \frac{υ}{{r}_{e} ω} & if υ < {r}_{e} ω \left(driving\right) \\ 1 - \frac{{r}_{e} ω}{υ} & if υ > {r}_{e} ω \left(braking\right)\end{matrix}\right.$ where *rₑ* stands for the effective radius of the wheel at the point of contact with the track. The linear speed of the centre of the wheel, v, is equivalent to the speed of the load handling device.

The contact forces involved in the wheelset dynamics of the vehicle 132 can be treated as linearly dependent on the creep (c.f. Joost Jacques Kalker's linear theory, valid for small creepage). Similarly, the forces which result in directional stability, propulsion and braking of the vehicle 132 can also be linked to the creep. It is present in a single wheelset and can accommodate the slight kinematic incompatibility introduced by coupling wheelsets without causing gross slippage. All the driving wheels 134, 136 of the load handling device 130 thus have to turn faster than the vehicle 132 is actually moving (known as creep control) to use the maximum coefficient of friction that is available. The maximum available friction occurs when the wheels are creeping. During the transition from the "all-stick" no-torque to the "all-slip" condition, the wheel has a gradual increase in slip, also known as creep and creepage.

In some nomenclatures, "slip" is the additional speed that the wheel has and "creep" is the level of slip divided by the locomotive speed, as outlined above. These parameters are measurable using physical sensors, e.g. position or speed sensors. The measured data can go into a creep controller 218 to control the respective driving mechanisms of the wheelsets based on the slip and creep levels. In the present examples, however, the creep controller 218 obtains a modelled creep value for the load handling device rather than a measured creep value based on position sensor data.

More specifically, the processing unit 340 of the present positioning system 300 is configured to obtain at least one coefficient value for the trained kinematic model and determine a creep value using the kinematic model stored in the storage. In examples, a vertical load value for a wheel, e.g. obtained from the corresponding force sensor or estimated taking into account the weight transfer and any tote mass and payload, is also an input to the processor 340 for determining the creep value using the kinematic model.

The at least one coefficient value is obtained by the model's training using recorded creep data for a plurality of training load handling devices. For example, in one embodiment, the kinematic model comprises a parameterised model for the creep of a wheel, e.g. a mathematical model of the creep in terms of parameters such as the wheel radius and one or more coefficients. The coefficient value(s) to be used when calculating the creep are determined by training the model using the recorded creep data with known parameter values. For example, the training load handling devices 30, such as the one shown in Figure 6, have position sensors 98a, 98b to provide a kinematic state reference, e.g. a velocity or position reference of the load handling device 30 during moves on the grid structure 15. Thus, creep values can be determined using the kinematic state reference and input into the model with the parameter values such as wheel radius, wheel loading, and the like. Building a dataset of such recorded creep values with corresponding parameter values means that the one or more coefficients of the kinematic model can be tuned to give a correspondence between a modelled, i.e. calculated, creep value and the empirically determined creep value to within a predetermined threshold, e.g. a "best fit". The predetermined threshold value may correspond to a target accuracy of the model, for example. The tuned model coefficient value(s) can then be stored for access by the processor 340, e.g. in the storage with the kinematic model, to calculate "live" creep values for a given wheel rolling on the grid 115 using the kinematic model with the said coefficient values and "live" parameters such as a measured loading of the wheel.

In examples, the processor 340 determines the kinematic state of the load handling device based on the modelled creep values for the respective wheels or wheelsets of the load handling device by averaging the creep values across the said wheels or wheelsets. For example, different wheelsets may be under different loading conditions, as described in examples above, which is accounted for in the model (e.g. using a loading parameter value in the parameterised model example). Averaging the determined creep values across the wheelsets can help reduce the noise level in the creep data and resulting kinematic data for the load handling device.

The following equation gives an example parameterised model: $σ = α \frac{T}{rN} ;$ where *σ* is the creep value of a given wheel or wheelset of the load handling device, *α* is the coefficient value, *T* is a nominal torque applied to the wheel or wheelset, *r* is a radius of the wheel(s), and N is a nominal vertical load on the wheel or wheelset. The torque is a difference between a motive torque and a cumulative resistive torque, *T_{M} - T_{R},* for example.

The above example parameterised model can be derived from considering the torque balance, which can be written as: ${T}_{M} - {T}_{R} - rF = J \dot{ω} ;$ where *T_{M}* is the motive torque, *T_{R}* is the cumulative resistive torque, Fis the traction force (i.e. friction between the wheel and the ground), *J* is the wheel inertia, and *ω̇* is the rotational acceleration of the wheel. Then considering the driving case, and leveraging the earlier expressions for a rotating wheel, it is possible to write the creep as: $σ = \left(1-\frac{v}{{ωr}_{e}}\right) = αμ = α \frac{F}{N} ;$ where a linear relationship between the coefficient of friction and creep, *µ* = *σ*/*α*, is used and again the symbol N represents the vertical load on the wheel. The linear relationship *µ = σ*/*α* is found to be a reasonable approximation of a curve of *µ* against *σ* in a stable region where the creep is less than a maximum creep, *σ_{M},* at maximum traction between the wheel and track, i.e. *σ < σ_{M}.* The coefficient *α* may be a fictitious constant related to the stiffness of the tyre or wheel. Substituting the torque balance assuming the term *Jω̇* to be negligible, i.e. *rF = Tₘ - T_{R},* reaches the example parameterised model as expressed above.

For this example model, the single coefficient value *α* is determined during the training of the parameterised model and stored with the model for calculating future creep values of wheels 134, 136 on load handling devices 130 moving around the grid structure 115.

Another example parameterised model of the vehicle (or "bot") velocity incorporating a coefficient to account for the velocity slip is given by the equation: ${\hat{v}}_{bot} = \frac{{{v}_{w}}_{¯} N}{N + βτ} ;$ where *v_{w}* is the velocity of a given wheel or wheelset, *β* is the coefficient value, *τ* is a torque applied to the wheel or wheelset, and N is the weight transfer, e.g. vertical load, on the wheel or wheelset. For this example model, the single coefficient value *β* is determined during the training of the parameterised model and stored with the model for calculating future velocity values of load handling devices 130 moving around the grid structure 115.

The kinematic model comprises an artificial neural network (or simply "neural network") model in other embodiments. In general, neural network systems undergo what is referred to as a "training phase". The neural network is trained for a particular purpose - in this case determining creep values for the wheels of a load handling device based on measured parameters. A neural network typically includes several interconnected neurons forming a directed, weighted graph in which vertices (corresponding to neurons) or edges (corresponding to connections) of the graph are associated with weights. The weights may be adjusted throughout training, altering the output of individual neurons and the neural network as a whole. Thus, the one or more coefficient values for the kinematic model may correspond to weight data representative of weights to be applied to the input data inputted to the neural network. The input data comprises measured wheel state data, such as the loading of the wheel or wheelset, a nominal torque applied to the wheel or wheelset, and a wheel radius, for example. After the training phase, the neural network (which may be referred to as a trained neural network and corresponds to the trained kinematic model) can determine creep values based on new wheel state data.

In some examples utilising neural networks, "structured" networks are used as they can generally be more useful than "unstructured" networks for this type of analytical problem. In structured neural networks, transfer functions may be stacked in a hierarchical way to create networks that have a large number of hidden layers. Each of the hidden layers can be seen as the next layer up in a series of non-linearities and computation is an iterative process in which layer outputs are used as inputs to compute the outputs for subsequent layers. A structured neural network can thus be trained using supervised or unsupervised learning. Conversely, unstructured neural networks do not have any hierarchical organisation; they are just a set of linear, static, fully connected neurons. They can thus be trained only in an unsupervised manner, since there is no mechanism to define input and output neurons.

In other embodiments, the kinematic model comprises a support-vector network, a Bayesian network, or another suitable mathematical model for predicting the creep of wheels based on measured wheel state data using a training dataset of creep values calculated from measured wheel state data and corresponding kinematic data of the vehicles. For example, were a nonlinear model used for determining the creep values, a kalman filter could be implemented to estimate the coefficient values in the model.

A kinematic model involving force terms, e.g. the parameterised model examples above involving torque and normal forces, may be referred to instead as a "dynamic model".

In examples, the storage 330 stores multiple trained models. For example, each trained model corresponds to a trajectory phase of the load handling device, such as an acceleration phase, a deceleration phase, and a cruise phase. Thus, a given model may be selected from the multiple trained models depending on the current trajectory phase of the load handling device, e.g. whether it is accelerating, decelerating, or cruising with substantially zero acceleration. The one or more coefficients of the respective models are thus trained based on recorded data during a corresponding trajectory phase, for example.

In examples, multiple trained models are stored, corresponding to respective loading modes of the load handling device. For example, the loading mode could be an unloaded mode, where the load handling device has no loading, such as when not transporting a container. Similarly, the loading mode could be a loaded mode where the load handling device has some loading such as when transporting a container of items. Another possible loading mode is a fully loaded mode, e.g. where the load handling device has a loading substantially equal to a maximum load threshold. Furthermore, there may be one or more part loaded modes where the load is between substantially zero (e.g. unloaded) and an intermediate load threshold below the maximum load threshold (e.g. fully loaded).

The plurality of trained models may be the same model or model type, with respective coefficient values determined from training the respective model. For example, the same parameterised model may be used for each trajectory phase, but with different coefficient values (e.g. values of *α* in the above example parameterised model) determined by the training for the corresponding trajectory phase. Similarly, there may be multiple neural networks used, with one for each trajectory phase and/or loading mode, where the network weights are determined differently based on the different training data corresponding to the said trajectory phases and/or loading modes.

In examples, the processor 340 determines the kinematic state of the load handling device based on encoder data obtained from the one or more wheel encoders, alongside the modelled creep value. As described above, the individual rotational speed of each wheel is determinable from the encoder data captured by the one or more wheel encoders in which a rotary device inside the encoder generates pulses indicative of the rotational speed of the wheel.

The processing unit 340 can be a general-purpose processor such as a central processing unit (CPU), a microprocessor, a DSP, an application-specific integrated circuit (ASIC), a field-programmable gate array (FPGA) or another programmable logic device, a discrete gate or transistor logic, discrete hardware components, or any suitable combination thereof designed to perform the functions described herein.

In the examples described with reference to Figures 7 to 13, the processing unit 340 and storage 330 are located within the load handling device 130. Alternatively, a server-client network model can be used in which the processing unit 340 for determining the kinematic state of a given load handling device is located in a server, e.g. the master controller 174 shown in Figure 10, along with the storage 330 storing the kinematic model. The server is configured to communicate with the load handling device, e.g. over the network 176, to receive the measured data for inputting into the model, the encoder data, etc., and to send one or both of the determined creep value and determined kinematic state of the load handling device.

In examples, referring back to Figure 11, the modelled kinematic state - determined using the kinematic model 198, e.g. by the processing unit 340 - is communicated to the move manager 192, along with the desired target position on the grid structure 115 defined in the master controller 174, where it is translated by the move manager 192 to positional units related to the grid structure 115 before being communicated to the motion control generator 182 to effect generation of the motion control profile. For example, the move manager 192 translates the commanded position from the master controller 174, expressed as a number of grid cells that the load handling device 130 is instructed to move on the grid structure 115, into "position units" that the controller or motion control generator understands. The controller or motion control generator 182 can then correlate the requested target position from the master controller with either the position component of the modelled kinematic state or the position reference provided by the motion control profile. Once the motion control profile is generated, the position controller 184 translates the data associated with motion control profile 194 into control signals that can be sent directly to the drive mechanism 186 to transition the load handling device to the target position. As discussed above, the position controller 184 can form part of the controller or control system 170 of the load handling device. The controller or control system comprises functional components related to the trajectory generator 182 and position controller 184.

In examples, the grid-type storage system, e.g. as described previously with reference to Figures 1 and 3, employing the described positioning system also includes one or more automatic identification and data capture (AIDC) tags located at predetermined points in the grid pattern. Such AIDC tags may comprise radio-frequency identification (RFID) tags, QR codes, barcodes, magnetic stripes or the like. AIDC is also commonly referred to as "Automatic Identification", "Auto-ID" and "Automatic Data Capture" and generally refers to the methods of automatically identifying objects, collecting data about them, and entering them directly into computer systems automatically, i.e. without human involvement.

With such AIDC tags, it is possible to locate a given load handling device relative to the grid structure by providing each of the load handling devices with one or more AIDC tag readers or scanners. The AIDC tags may be fixed relative to the grid structure to provide a series of reference points on the grid structure. As the given load handling device moves across the grid structure, the load handling device's respective AIDC tag reader reads the signals from one or more of the AIDC tags fixed at various locations on the grid structure. Typically, the AIDC tags are fixed at a junction or crossroads of the tracks at each grid cell. Each AIDC tag (or "label") contains encoded data, e.g. corresponding to the tag's location in the grid structure, such as coordinate data in terms of grid cells.

In such examples where AIDC means are employed in the storage system, the processing unit 340 of the positioning system may be further configured to determine the kinematic state of a load handling device based on automatic identification data captured by the AIDC machine reader mounted on the load handling device. The AIDC machine reader is itself configured to read encoded data from the one or more AIDC tags. For example, the kinematic state of the load handling device determined using the trained model is refined based on the captured automatic identification data from a scanned tag in the grid structure. The readings (or "activations") of the AIDC machine reader (or other "grid sensor") provide an independent source of position information for the load handling device, e.g. a source of truth for the position of the load handling device on the grid structure, at a lower resolution. The activations of the grid sensor can thus be used to refine the one or more coefficients in the kinematic model, which are adaptive in examples. When the load handling device crosses a grid cell boundary, the one or more coefficients are updated accordingly, for example.

Returning to the example parameterised model above for the velocity creep value (or "slip ratio"), *σ*, and expressing the model in terms of the vehicle (or "bot") velocity yields: $σ ≡ Δv / v = α \frac{T}{rN} ;$ $⇒ Δv ≡ {v}_{w} - {v}_{b} = {v}_{w} ⋅ α \frac{T}{rN} ;$ $⇒ {v}_{b} = {v}_{w} \left(1-α\frac{T}{rN}\right) = ω \left(r-α\frac{T}{N}\right) .$

In these equations, *v_{w} = rω* is the wheel velocity with *r* being the wheel radius parameter, *ω* the angular velocity of the wheel, and *v_{b}* the bot velocity. An estimation of the bot position can then be derived based on the above equation for the bot velocity, e.g. by integration of the bot velocity with respect to time, which is set out in more detail below.

In examples, the wheel radius *r* and model coefficient parameters, e.g. *α,* are assumed to be constants. At each sampling time, an estimate of the loading force N for each wheel may be made based on an internal model of the bot physics. Additionally, or alternatively, the estimate of the of the loading force N for each wheel may be made based on a target acceleration value, e.g. produced by the controller, which may be treated as an approximation of the real acceleration of the bot in the algorithm. A resistive torque value is also computed at each sampling time, based on the internal model of the bot physics and the most recent estimation of the bot speed, for example. The values of the wheel velocity and motive torque may be published as data by a component, e.g. the motor 220. The above equation for the bot velocity may be calculated for each of the wheels driving the bot to produce multiple corresponding estimates of the bot velocity. The different estimates are averaged to reduce the effect of perturbations, for example. The resultant bot velocity estimate is then integrated with respect to time to obtain an estimate of the bot position, as mentioned above.

For example, integrating the above equation for the bot velocity between two time instants *t*₁ and *t*₂ yields: ${\int }_{{t}_{1}}^{{t}_{2}} {v}_{b} dt = r {\int }_{{t}_{1}}^{{t}_{2}} ω dt - α {\int }_{{t}_{1}}^{{t}_{2}} ω \frac{{T}_{M} - {T}_{R}}{N} dt ;$ where the substitution for the resultant torque, *T = T_{M} - T_{R},* has been made for completeness. By choosing the two time instants to correspond with two consecutive activations of the grid sensors, the term on the left may represent the distance the wheel has travelled during this time, i.e. the length of the grid cell, which is a known parameter: $\begin{matrix}{s}_{cell} = {\int }_{{e}_{k - 1}}^{{e}_{k}} {v}_{b} dt = r {\int }_{{e}_{k - 1}}^{{e}_{k}} ω dt - α {\int }_{{e}_{k - 1}}^{{e}_{k}} \frac{ωT}{N} dt \\ ⇒ {s}_{cell} = ra + αb ;\end{matrix}$ where the time instants, *e*_{*k*-1}and *eₖ,* are those chosen to correspond with activations at two contiguous grid cells, *k* - 1 and k. In the resultant equation, *a* and *b* are parameters representing the resultant values of the respective time integrals. A least-squares method can thus be applied to this equation form using the known cell length value, i.e. the length of a single grid cell in the grid structure 115, for *s_{cell}.* This allows the parameters *α* and *r* to be refined, e.g. continuously updated, using the grid sensor activation information. The least-squares method is a Bayesian Recursive Least Squares algorithm in certain cases.

In further examples, an estimate of the track length *ŷ* is given by: $\hat{y} = \left[{\int }_{{t}_{1}}^{{t}_{2}} ω d t-{\int }_{{t}_{1}}^{{t}_{2}} ω \frac{{T}_{M} - {T}_{R}}{{F}_{N}} dt\right] \left[\begin{matrix}{r}_{e} \\ α\end{matrix}\right] + d = H \hat{θ} + d$ where H represents a 2x1 vector defined by the two time integrals, *θ̂* is the estimated 2x1 vector of the wheel radius *rₑ* and *α* parameters, and d *~*(0, R) is a stochastic noise parameter with an expected value of zero and a variance R, representing the physical uncertainty in the cell length. Alternative notation is used here for the normal force, *F_{N}*, and the wheel radius *rₑ*. A transpose of one of the column vectors H or *θ̂* may be used for multiplying them together.

In examples, initial estimates of the model parameters, e.g. *α* and *rₑ,* are determined by running the kinematic model on recorded data, e.g. "offline", to find a good fit for each of the parameter values, e.g. using a classical least-squares method. For example, logged data recorded from multiple load handling devices operating in the storage system comprises data for the velocities, torques and tote masses which can be inputted into the kinematic model to estimate the unknown model parameters, e.g. by a classical least-squares algorithm. As described above, the model parameters can then be refined when running the kinematic model "online", e.g. using live data for the velocities, torques and tote masses. For example, a recursive least-squares (RLS) method is implemented for the latter refining phase, such as the Bayesian RLS algorithm.

A method of refining the model parameters, e.g. *α* and *rₑ,* may involve defining a covariance matrix, P *= diag*(*λ_{rₑrₑ},λ_{αα}*)*,* with *λ_{rₑrₑ}* and *λ_{αα}* representing the respective variance of the corresponding parameters. The variances could be either the sample variance values obtained from logged data or an initial estimate, for example.

The method may then comprise three main steps:
1. Computing a gain, K, as: $K = {P}_{a} {H}^{T} {\left({HP}_{a}{H}^{T}+R\right)}^{- 1}$
2. Updating the covariance matrix based on the computed gain value: $P = \left(I-KH\right) {P}_{a}$
3. Updating the estimated parameter values based on the computed gain value: $\hat{θ} = \hat{{θ}_{a}} + K \left(y-H\hat{{θ}_{a}}\right) ;$ where the notation *Xₐ* has been used to distinguish a current value of a given variable *X* from the new refined value the variable is assuming in that step of the method.

The method thus allows the model parameters to be refined (or "re-tuned") at each grid sensor activation. The estimate *ŷ* of the cell length may be maintained close to the nominal (known) value. The error in computing the bot velocity using the model can also be kept in check.

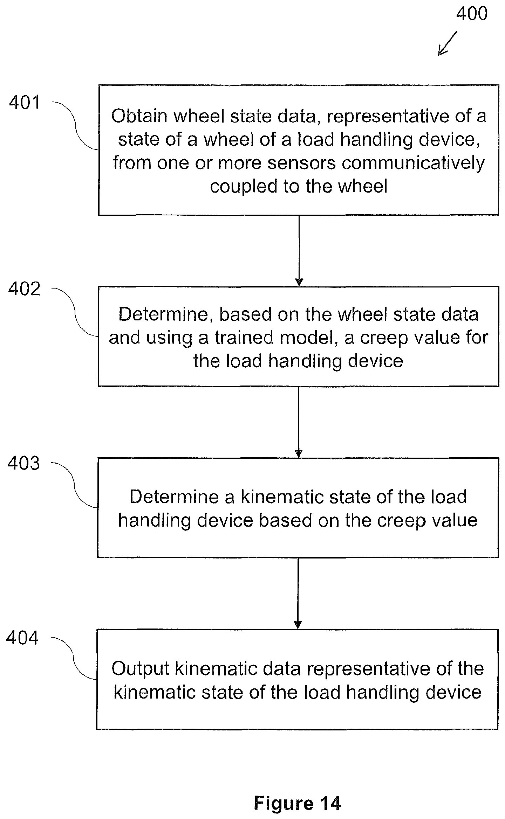

Figure 14 shows a method 400 of determining a kinematic state of a load handling device in a storage system. The load handling device may be one of the example load handling devices 130 described with reference to Figures 7 to 13. The storage system may be of the type described throughout and depicted in Figures 1 to 3. The method 400 may be performed by one or more components of the positioning system 300 previously described.

At 401, wheel state data, representative of a state of a wheel of the load handling device, is obtained from one or more sensors communicatively coupled to the wheel. In examples, the wheel state data comprises torque data representative of a nominal torque applied to the wheel of the load handling device. The wheel state data may additionally or alternatively include load data representative of a nominal vertical load on the wheel of the load handling device. In some examples, the wheel state data represents the state of a set of wheels (a wheelset), e.g. a nominal torque applied to the wheelset and /or a nominal vertical load on the wheelset. The one or more sensors are thus sensors to measure the corresponding type of wheel state data. For example, the sensors include one or more force sensors configured to detect a load on a corresponding wheel.

At 402, a creep value for the load handling device is determined based on the wheel state data using a trained model. As described in earlier examples, the trained model may include at least one of a neural network, a Bayesian network, a support-vector network, or a parameterised model. The corresponding descriptions apply. In the parameterised model example, the method 400 may also include obtaining a tyre coefficient value determined from training the parameterised model and inputting the tyre coefficient value into the parameterised model with the obtained wheel state data. Examples of tyre coefficients *α* and *β* were given in the example parameterised models. Such tyre coefficients may be stored in storage to be accessed and inputted into the parameterised model to calculate new creep values and/or bot velocity values. In the neural network model example, the coefficients may correspond to weights of the neural network obtained during the training phase and stored as part of the neural network model for applying to calculate new creep values and/or bot velocity values.

As described in earlier examples, there may be multiple trained models from which a given model is selected as part of the method 400 of determining the kinematic state of the load handling device. For example, the selection of the given model is dependent on the current trajectory phase and/or the loading mode of the load handling device. For example, the trajectory phase corresponds to whether the load handling device is accelerating, decelerating, or cruising. The one or more coefficients of the respective models are thus trained based on recorded data during the corresponding trajectory phase, for example. The loading mode could be an unloaded mode, a fully loaded mode where the load handling device has a loading substantially equal to a maximum load threshold, or one or more part loaded modes where the loading is between substantially zero and the maximum load threshold.

At 403, the kinematic state of the load handling device is determined based on the modelled creep value. For example, the kinematic state includes at least one of a position, a velocity, an acceleration, a jerk, or an orientation of the load handling device. The position, velocity, acceleration and jerk components of the kinematic state can be evaluated from one another via integration or differentiation with respect to time. Thus, a modelled velocity creep can be used to apply a delta correction to an estimated bot velocity evaluated based on the rotational wheel velocity. Integration of the corrected bot velocity can give a corrected bot position accounting for the creep (or "micro slip") of the wheels, which is a feature of the wheel's traction mechanics as discussed earlier.

At 404, kinematic data representative of the kinematic state of the load handling device is output. The output kinematic data can be used to generate a target position for the load handling device, e.g. in accordance with examples described with reference to Figures 11 and 12. For example, instead of using "fifth" wheel position sensors to provide a reference of a kinematic state of the load handling device, the kinematic state is modelled using a trained model to provide the reference position, velocity, and/or acceleration for (re-)generating a planned trajectory for the loading device. Similarly, a feed-forward signal, representative of a torque demand on the wheel, can be compensated based on the output kinematic data to determine a total torque demand for the wheel. Thus, monitoring of the kinematic state of the load handling device to compensate the otherwise estimated position and resultant torque demands can be done without using physical kinematic sensors, which have inherent drawbacks as an additional component of the load handling device.

As described above, the determined kinematic state of the load handling device can be refined based on automatic identification data captured by an automatic identification and data capture (AIDC) machine reader mounted on the load handling device and configured to read encoded data from one or more AIDC tags, e.g. RFID tags, located at predetermined points in the grid pattern.

The method 400 of determining the kinematic state of the load handling device can be implemented by one or more processors, e.g. the processing unit 340 of the positioning system 300 described with reference to Figure 13. The one or more processors may carry out the method in accordance with instructions, e.g. computer program code, stored on a computer-readable storage medium such as the storage 330 in the positioning system 300 described with reference to Figure 13.

The above examples are to be understood as illustrative examples. Further examples are envisaged. For example, although in the examples described above the creep estimation *σ = αµ* is used for each of the three motion phases of the load handling devices, e.g. acceleration, deceleration and cruise, while the model coefficients may be determined (and dynamically refined in certain examples) for each phase independently. Examples are envisaged wherein a different relationship between the creep and bot velocity is used for at least one of the motion phases of the load handling device. For example, a simplified relationship may be used for the cruise phase. When cruising, the load handling device is moving at a substantially constant speed, meaning that the traction force needs to only balance out the resistive forces to maintain the substantially constant speed, with the wheels working at a relatively low friction coefficient value, *µ*. Thus, a different relationship between the creep and friction coefficient may be appropriate for the cruise phase compared to the linear relationship used for at least one of the other motion phases. In some cases, the bot velocity is representable by a nonlinear equation. As described in examples above, a different approach may be implemented for a nonlinear dynamic model, e.g. implementing a kalman filter.

Examples are also envisaged in which the effective wheel radius is neither assumed to be constant nor parameterised as a single variable, but rather expressed as a linear function of the nominal radius and the vertical load, e.g. *rₑ* = r(1 *- γF_{N}*)*,* where *r* is the nominal wheel radius and *rₑ* is the effective wheel radius under loading. Thus, a further parameter is introduced to the model, e.g. *γ*, which may be considered to be a constant in all three motion phases for the load handling device. In these examples, the need to maintain different model parameters for each of the motion phases may be removed by such parameterisation of the effective wheel radius to try and reduce fluctuations in the estimated parameters of the model.

Furthermore, in addition to the methods described in which a trained model is used to determine creep values, and kinematic states of the load handling device based thereon, examples are envisaged of methods to train a model for calibrating a positioning system of a load handling device. Such a method includes, for example, building a training dataset of calculated creep values and/or corresponding kinematic states determined for a plurality of training load handling devices, e.g. based on wheel velocity data recorded using position sensors mounted on the plurality of training load handling devices, configured to execute predetermined moves. The training dataset (also simply referred to as "training data") is inputted to a machine-learning algorithm to build the kinematic model based on the training data in order to make predictions of creep values and/or corresponding kinematic states of load handling devices, without being explicitly programmed to do so. For example, an artificial neural network can be used as the machine learning algorithm to develop the kinematic model based on the training data - the "trained" neural network corresponding to the kinematic model. The trained model can then be used to calibrate the positioning system of the load handling device by inputting new data into the neural network which outputs a predicted creep value and/or kinematic state of the load handling device based thereon. For example, determining the kinematic state of the load handling device may involve obtaining the wheel state data from one or more sensors communicatively coupled to the wheel, and determining, based on the wheel state data and using a trained kinematic model comprising a machine learning algorithm (e.g. neural network), the kinematic state of the load handling device. Kinematic data representative of the kinematic state of the load handling device can then be outputted in the same way.

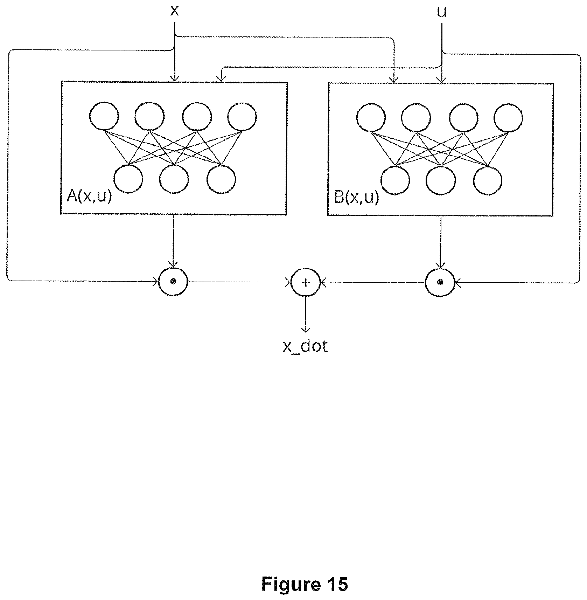

As an example, a (structured) neural network may comprise two parallel sub-networks (A and *B)* as shown in Figure 15, where x is the kinematic state of the load handling device and u is the input (or "control") vector (e.g. comprising torque, load, angular velocity values).

The architecture of the sub-network A can be defined by any number of layers and parameters, with the only constraint that the final layer has a number N of parameters, matching the dimensionality N of the state space. In the same way, the architecture of the sub-network B can be defined by any number of layers and parameters, with the constraint that the final layer has a number M of parameters, matching the dimensionality M of the control space.

Such a defined neural network provides a model of the form *ẋ* = *A*(*x, u)x + B*(*x, u*)*u* where *ẋ* is the time derivative of the kinematic state vector x. This equation for the kinematic model then represents the dynamic of the state of a physical system. If the dynamical system is linear and time-invariant *A* and *B* will be constant. In the present case, the terms of the integrals in the equations change at each move, thus *A* and *B* will be time-varying but still linear (at least around the current working point, i.e. linearised in the current state). This means that *A* and *B* are functions of the inputs u, but could in general also be functions of the current state x. In a continuous time system, the output at a given time t can be dependent on the state at time t. This is not a strict requirement of the model but is a general possibility, for example *A* and *B* might be different if the load handling device is accelerating compared to when it is decelerating. Alternatively, in a discrete time implementation of this system, the model may be of the form *x*_{*k+*1} *= Ã*(*xₖ, uₖ*)*xₖ + B̃*(*xₖ, uₖ*)*uₖ* where the matrices *Ã* and *B̃* representative of the sub-networks of the system are different to those in the continuous time implementation (A and *B).*

In these examples, the neural network may be trained using classical gradient-based optimizers, for example, and then implemented in a discrete-time manner, e.g. by a processor onboard the load handling device.

It is also to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the accompanying claims.

## Claims

1. A positioning system (300) for a load handling device (130) in a storage system, the positioning system (300) comprising:
one or more encoders (310) for a plurality of wheels of the load handling device (130);
one or more force sensors (320) configured to detect a vertical load on a corresponding wheel of the plurality of wheels (134, 136) of the load handling device (130);
storage (330) storing a trained model for determining creep values for the load handling device (130) based at least on a given vertical load on a given wheel of the load handling device (130); and
a processing unit (340) to:
obtain, from a corresponding force sensor from the one or more force sensors (320), a vertical load value for a wheel of the load handling device (130);
obtain at least one coefficient value for the trained model, the coefficient value having been obtained by training the trained model on recorded creep data for a plurality of training load handling devices;
determine, using the trained model stored in the storage (330), a creep value for the load handling device (130) based at least on the vertical load value and the at least one coefficient value; and
determine a kinematic state of the load handling device based on the creep value and encoder data obtained from the one or more encoders.

2. The positioning system (300) according to claim 1, wherein the kinematic state comprises a position of the load handling device (130) relative to the storage system.

3. The positioning system (300) according to claim 1 or 2, wherein the one or more encoders (310) are comprised within the load handling device (130).

4. The positioning system (300) according to any one of claims 1 to 3, wherein the processing unit (340) and storage (330) are positioned within the load handling device (130).

5. The positioning system (300) according to any one of claims 1 to 3, the positioning system comprising a server comprising the processing unit (340) and the storage (330), wherein the server is configured to communicate with the load handling device (130) to receive the encoder data and send one or both of the determined creep value and determined position of the load handling device (130).

6. The positioning system (300) according to any one of claims 1 to 5, the trained model having been trained based on creep data determined from wheel velocity data recorded using position sensors mounted on a plurality of training load handling devices configured to execute predetermined moves in the storage system.

7. The positioning system (300) according to any one of claims 1 to 6, the trained model comprising at least one of a neural network, a Bayesian network, a support-vector network, or a parameterised model.

8. The positioning system (300) according to claim 7, wherein the trained model comprises the parameterised model, and the processing unit is to determine the creep value by:
obtaining a tyre coefficient value determined from training the parameterised model; and
inputting the tyre coefficient value into the parameterised model with the obtained vertical load value.

9. The positioning system (300) according to any preceding claim, wherein the trained model is selectable, from a plurality of trained models, by the processing unit to correspond with a trajectory phase of the load handling device (130).

10. The positioning system (300) according to any preceding claim, wherein the trained model is selectable, from a plurality of trained models, by the processing unit to correspond with a loading mode of the load handling device (130).

11. The positioning system (300) according to claim 9 or 10, wherein the plurality of trained models comprises the same parameterised model with respective tyre coefficient values determined from training the respective model.

12. A storage system comprising the positioning system (300) according to any one of claims 1 to 11, the storage system comprising:
a first set (22a) of parallel tracks (22) extending in an X-direction, and a second set (22b) of parallel tracks (22) extending in a Y-direction transverse to the first set in a substantially horizontal plane to form a grid pattern comprising a plurality of grid spaces (17);
a plurality of stacks (12) of containers (10) located beneath the tracks (22), and arranged such that each stack (12) is located within a footprint of a single grid space (17);
the load handling device (130) being arranged to selectively move in at least one of the X and/or Y directions on the tracks (22) and to handle a container (10).

13. The storage system according to claim 12, wherein the at least one load handling device (130) has a footprint that occupies only a single grid space (17) in the storage system, such that a given load handling device occupying one grid space does not obstruct another load handling device occupying or traversing adjacent grid spaces.

14. The storage system according to claim 12 or 13, comprising one or more automatic identification and data capture, AIDC, tags located at predetermined points in the grid pattern, wherein the processing unit is configured to determine the kinematic state of the load handling device (130) based on automatic identification data captured by an AIDC machine reader mounted on the load handling device and configured to read encoded data from the one or more AIDC tags.

15. The storage system according to any one of claims 12 to 14, wherein the wheels (134, 136) of the load handling device (130) comprise respective wheel hub motors (160).

## Patentansprüche

1. Positionierungssystem (300) für eine Lasthandhabungsvorrichtung (130) in einem Lagersystem, wobei das Positionierungssystem (300) umfasst:
einen oder mehrere Encoder (310) für eine Mehrzahl von Rädern der Lasthandhabungsvorrichtung (130);
einen oder mehrere Kraftsensoren (320), die konfiguriert sind, eine Vertikallast auf einem entsprechenden Rad der Mehrzahl von Rädern (134, 136) der Lasthandhabungsvorrichtung (130) zu detektieren;
einen Speicher (330), der ein trainiertes Modell zum Bestimmen von Schlupfwerten für die Lasthandhabungsvorrichtung (130) basierend zumindest auf einer gegebenen Vertikallast auf einem gegebenen Rad der Lasthandhabungsvorrichtung (130) speichert; und
eine Verarbeitungseinheit (340) zum:
Erhalten, von einem entsprechenden Kraftsensor von dem einen oder den mehreren Kraftsensoren (320), eines Vertikallastwerts für ein Rad der Lasthandhabungsvorrichtung (130);
Erhalten mindestens eines Koeffizientenwerts für das trainierte Modell, wobei der Koeffizientenwert durch Trainieren des trainierten Modells auf aufgezeichneten Schlupfdaten für eine Mehrzahl von Trainings-Lasthandhabungsvorrichtungen erhalten worden ist;
Bestimmen, unter Verwendung des in dem Speicher (330) gespeicherten trainierten Modells, eines Schlupfwerts für die Lasthandhabungsvorrichtung (130) basierend zumindest auf dem Vertikallastwert und dem mindestens einen Koeffizientenwert; und
Bestimmen eines kinematischen Zustands der Lasthandhabungsvorrichtung basierend auf dem Schlupfwert und Encoderdaten, die von dem einen oder den mehreren Encodern erhalten werden.

2. Positionierungssystem (300) nach Anspruch 1, wobei der kinematische Zustand eine Position der Lasthandhabungsvorrichtung (130) relativ zu dem Lagersystem umfasst.

3. Positionierungssystem (300) nach Anspruch 1 oder 2, wobei der eine oder die mehreren Encoder (310) in der Lasthandhabungsvorrichtung (130) umfasst sind.

4. Positionierungssystem (300) nach einem der Ansprüche 1 bis 3, wobei die Verarbeitungseinheit (340) und der Speicher (330) innerhalb der Lasthandhabungsvorrichtung (130) positioniert sind.

5. Positionierungssystem (300) nach einem der Ansprüche 1 bis 3, wobei das Positionierungssystem einen Server umfasst, der die Verarbeitungseinheit (340) und den Speicher (330) umfasst, wobei der Server konfiguriert ist, mit der Lasthandhabungsvorrichtung (130) zu kommunizieren, um die Encoderdaten zu empfangen und einen oder beide von dem bestimmten Schlupfwert und der bestimmten Position der Lasthandhabungsvorrichtung (130) zu senden.

6. Positionierungssystem (300) nach einem der Ansprüche 1 bis 5, wobei das trainierte Modell basierend auf Schlupfdaten trainiert worden ist, die aus Raddrehzahldaten bestimmt worden sind, die unter Verwendung von an einer Mehrzahl von Trainings-Lasthandhabungsvorrichtungen montierten Positionssensoren aufgezeichnet worden sind, die konfiguriert sind, vorbestimmte Bewegungen in dem Lagersystem auszuführen.

7. Positionierungssystem (300) nach einem der Ansprüche 1 bis 6, wobei das trainierte Modell mindestens eines von einem neuronalen Netzwerk, einem Bayes'schen Netzwerk, einem Stützvektornetzwerk oder einem parametrisierten Modell umfasst.

8. Positionierungssystem (300) nach Anspruch 7, wobei das trainierte Modell das parametrisierte Modell umfasst und die Verarbeitungseinheit den Schlupfwert bestimmen soll durch:
Erhalten eines Reifenkoeffizientenwerts, der aus Trainieren des parametrisierten Modells bestimmt worden ist; und
Eingeben des Reifenkoeffizientenwerts in das parametrisierte Modell mit dem erhaltenen Vertikallastwert.

9. Positionierungssystem (300) nach einem der vorhergehenden Ansprüche, wobei das trainierte Modell aus einer Mehrzahl von trainierten Modellen durch die Verarbeitungseinheit auswählbar ist, um einer Trajektorienphase der Lasthandhabungsvorrichtung (130) zu entsprechen.

10. Positionierungssystem (300) nach einem der vorhergehenden Ansprüche, wobei das trainierte Modell aus einer Mehrzahl von trainierten Modellen durch die Verarbeitungseinheit auswählbar ist, um einem Belademodus der Lasthandhabungsvorrichtung (130) zu entsprechen.

11. Positionierungssystem (300) nach Anspruch 9 oder 10, wobei die Mehrzahl von trainierten Modellen dasselbe parametrisierte Modell mit jeweiligen Reifenkoeffizientenwerten umfasst, die aus Trainieren des jeweiligen Modells bestimmt worden sind.

12. Lagersystem, umfassend das Positionierungssystem (300) nach einem der Ansprüche 1 bis 11, wobei das Lagersystem umfasst:
einen ersten Satz (22a) paralleler Schienen (22), die sich in einer X-Richtung erstrecken, und einen zweiten Satz (22b) paralleler Schienen (22), die sich in einer Y-Richtung quer zu dem ersten Satz in einer im Wesentlichen horizontalen Ebene erstrecken, um ein Gittermuster zu bilden, das eine Mehrzahl von Gitterfeldern (17) umfasst;
eine Mehrzahl von Stapeln (12) von Behältern (10), die sich unter den Schienen (22) befinden und so angeordnet sind, dass sich jeder Stapel (12) innerhalb einer Grundfläche eines einzelnen Gitterfelds (17) befindet;
wobei die Lasthandhabungsvorrichtung (130) angeordnet ist, sich selektiv in mindestens einer der X- und/oder Y-Richtungen auf den Schienen (22) zu bewegen und einen Behälter (10) zu handhaben.

13. Lagersystem nach Anspruch 12, wobei die mindestens eine Lasthandhabungsvorrichtung (130) eine Grundfläche aufweist, die nur ein einzelnes Gitterfeld (17) in dem Lagersystem einnimmt, sodass eine gegebene Lasthandhabungsvorrichtung, die ein Gitterfeld einnimmt, eine andere Lasthandhabungsvorrichtung nicht behindert, die angrenzende Gitterfelder einnimmt oder durchfährt.

14. Lagersystem nach Anspruch 12 oder 13, umfassend ein oder mehrere Tags für automatische Identifikation und Datenerfassung, AIDC-Tags, die sich an vorbestimmten Punkten in dem Gittermuster befinden, wobei die Verarbeitungseinheit konfiguriert ist, den kinematischen Zustand der Lasthandhabungsvorrichtung (130) basierend auf automatischen Identifikationsdaten zu bestimmen, die von einem an der Lasthandhabungsvorrichtung montierten AIDC-Maschinenleser erfasst werden, der konfiguriert ist, codierte Daten von dem einen oder den mehreren AIDC-Tags zu lesen.

15. Lagersystem nach einem der Ansprüche 12 bis 14, wobei die Räder (134, 136) der Lasthandhabungsvorrichtung (130) jeweilige Radnabenmotoren (160) umfassen.

## Revendications

1. Système de positionnement (300) pour un dispositif de manipulation de charge (130) dans un système de stockage, le système de positionnement (300) comprenant :
un ou plusieurs codeurs (310) pour une pluralité de roues du dispositif de manipulation de charge (130) ;
un ou plusieurs capteurs de force (320) configurés pour détecter une charge verticale sur une roue correspondante de la pluralité de roues (134, 136) du dispositif de manipulation de charge (130) ;
un stockage (330) stockant un modèle entraîné pour déterminer des valeurs de fluage du dispositif de manipulation de charge (130) en fonction au moins d'une charge verticale donnée sur une roue donnée du dispositif de manipulation de charge (130) ; et
une unité de traitement (340) pour :
obtenir, à partir d'un capteur de force correspondant parmi les un ou plusieurs capteurs de force (320), une valeur de charge verticale pour une roue du dispositif de manipulation de charge (130) ;
obtenir au moins une valeur de coefficient pour le modèle entraîné, la valeur de coefficient ayant été obtenue en entraînant le modèle entraîné sur des données de fluage enregistrées pour une pluralité de dispositifs de manipulation de charge d'entraînement ;
déterminer, à l'aide du modèle entraîné stocké dans le stockage (330), une valeur de fluage pour le dispositif de manipulation de charge (130) en fonction au moins de la valeur de la charge verticale et de l'au moins une valeur de coefficient ; et
déterminer un état cinématique du dispositif de manipulation de charge en fonction de la valeur de fluage et de données de codeur obtenues à partir des un ou plusieurs codeurs.

2. Système de positionnement (300) selon la revendication 1, dans lequel l'état cinématique comprend une position du dispositif de manipulation de charge (130) par rapport au système de stockage.

3. Système de positionnement (300) selon la revendication 1 ou 2, dans lequel les un ou plusieurs codeurs (310) sont compris au sein du dispositif de manipulation de charge (130).

4. Système de positionnement (300) selon l'une quelconque des revendications 1 à 3, dans lequel l'unité de traitement (340) et le stockage (330) sont positionnés au sein du dispositif de manipulation de charge (130).

5. Système de positionnement (300) selon l'une quelconque des revendications 1 à 3, le système de positionnement comprenant un serveur comprenant l'unité de traitement (340) et le stockage (330), dans lequel le serveur est configuré pour communiquer avec le dispositif de manipulation de charge (130) pour recevoir les données de codeur et envoyer une ou les deux de la valeur de fluage déterminée et de la position déterminée du dispositif de manipulation de charge (130).

6. Système de positionnement (300) selon l'une quelconque des revendications 1 à 5, le modèle entraîné ayant été entraîné en fonction de données de fluage déterminées à partir de données de vitesse de roue enregistrées à l'aide de capteurs de position montés sur une pluralité de dispositifs de manipulation de charge d'entraînement configurés pour exécuter des mouvements prédéterminés dans le système de stockage.

7. Système de positionnement (300) selon l'une quelconque des revendications 1 à 6, le modèle entraîné comprenant au moins l'un d'un réseau neuronal, d'un réseau bayésien, d'un réseau à vecteurs de support, ou d'un modèle paramétré.

8. Système de positionnement (300) selon la revendication 7, dans lequel le modèle entraîné comprend le modèle paramétré, et l'unité de traitement doit déterminer la valeur de fluage par :
obtention d'une valeur de coefficient de pneumatique déterminée à partir de l'entraînement du modèle paramétré ; et
insertion de la valeur de coefficient de pneumatique dans le modèle paramétré avec la valeur de charge verticale obtenue.

9. Système de positionnement (300) selon une quelconque revendication précédente, dans lequel le modèle entraîné est sélectionnable, parmi une pluralité de modèles entraînés, par l'unité de traitement pour correspondre à une phase de trajectoire du dispositif de manipulation de charge (130).

10. Système de positionnement (300) selon une quelconque revendication précédente, dans lequel le modèle entraîné est sélectionnable, parmi une pluralité de modèles entraînés, par l'unité de traitement pour correspondre à un mode de chargement du dispositif de manipulation de charge (130).

11. Système de positionnement (300) selon la revendication 9 ou 10, dans lequel la pluralité de modèles entraînés comprend le même modèle paramétré avec des valeurs de coefficient de pneu respectives déterminées à partir de l'entraînement du modèle respectif.

12. Système de stockage comprenant le système de positionnement (300) selon l'une quelconque des revendications 1 à 11, le système de stockage comprenant :
un premier ensemble (22a) de rails parallèles (22) s'étendant dans une direction X, et un second ensemble (22b) de rails parallèles (22) s'étendant dans une direction Y transversale au premier ensemble dans un plan sensiblement horizontal pour former un motif de grille comprenant une pluralité d'espaces de grille (17) ;
une pluralité de piles (12) de contenants (10) situés sous les rails (22), et agencés de telle sorte que chaque pile (12) est située au sein d'une empreinte d'un espace de grille (17) unique ;
le dispositif de manipulation de charge (130) étant agencé pour effectuer un mouvement sélectif dans au moins l'une des directions X et/ou Y sur les rails (22) et pour manipuler un contenant (10).

13. Système de stockage selon la revendication 12, dans lequel l'au moins un dispositif de manipulation de charge (130) a une empreinte qui occupe uniquement un espace de grille (17) unique dans le système de stockage, de telle sorte qu'un dispositif de manipulation de charge donné occupant un espace de grille n'obstrue pas un autre dispositif de manipulation de charge occupant ou traversant des espaces de grille adjacents.

14. Système de stockage selon la revendication 12 ou 13, comprenant une ou plusieurs étiquettes d'identification automatique et de capture de données, AIDC, situées au niveau de points prédéterminés dans le motif de grille, dans lequel l'unité de traitement est configurée pour déterminer l'état cinématique du dispositif de manipulation de charge (130) en fonction de données d'identification automatique capturées par un lecteur de machine AIDC monté sur le dispositif de manipulation de charge et configuré pour lire des données codées à partir des une ou plusieurs étiquettes AIDC.

15. Système de stockage selon l'une quelconque des revendications 12 à 14, dans lequel les roues (134, 136) du dispositif de manipulation de charge (130) comprennent des moteurs de moyeu de roue (160) respectifs.
